(19) Europäisches Patentamt
European Patent Office
Office européen des brevets

(11) **EP 2 519 805 B1**

(12) **EUROPÄISCHE PATENTSCHRIFT**

(45) Veröffentlichungstag und Bekanntmachung des Hinweises auf die Patenterteilung:
**10.10.2018   Patentblatt 2018/41**

(51) Int Cl.:
*G01F 1/84* (2006.01)     *G01N 11/02* (2006.01)

(21) Anmeldenummer: **10795009.9**

(22) Anmeldetag: **22.12.2010**

(86) Internationale Anmeldenummer:
**PCT/EP2010/070448**

(87) Internationale Veröffentlichungsnummer:
**WO 2011/080171 (07.07.2011 Gazette 2011/27)**

(54) **MEßSYSTEM MIT EINEM MEßWANDLER VOM VIBRATIONSTYP UND VERFAHREN ZUM MESSEN EINER DRUCKDIFFERENZ**

MEASURING SYSTEM COMPRISING A VIBRATION-TYPE TRANSDUCER AND METHOD FOR MEASURING A PRESSURE DIFFERENCE

SYSTÈME DE MESURE COMPORTANT UN CONVERTISSEUR DE MESURE DE TYPE VIBRANT ET PROCÉDÉ POUR MESURER UNE DIFFÉRENCE DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2010   DE 102010000759**
**31.12.2009   DE 102009060915**

(43) Veröffentlichungstag der Anmeldung:
**07.11.2012   Patentblatt 2012/45**

(73) Patentinhaber: **Endress+Hauser Flowtec AG**
**4153 Reinach (CH)**

(72) Erfinder:
• **KUMAR, Vivek**
**CH-4132 Muttenz (CH)**
• **ANKLIN, Martin**
**CH-4143 Dornach (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A1- 1 659 377       WO-A1-00/36379**
**WO-A1-2009/134268     US-A- 5 473 949**
**US-A1- 2002 065 614   US-A1- 2006 173 639**
**US-B2- 7 406 878**

EP 2 519 805 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein, insb. als ein Kompakt-Meßgerät und/oder ein Coriolis-Massedurchfluß-Meßgerät ausgebildetes, Meßsystem für fließfähige, insb. fluide, Medien, das einen im Betrieb zumindest zeitweise von Medium durchströmten, von wenigstens einer das strömende Medium charakterisierenden Meßgröße, insb. einem Massendurchfluß, einer Dichte, einer Viskosität etc., beeinflußte Primärsignale generierenden Meßwandler vom Vibrationstyp sowie eine mit dem Meßwandler elektrisch gekoppelte und vom Meßwandler gelieferte Primärsignale zu Meßwerten verarbeitende Umformer-Elektronik umfaßt.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Medium Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen Prozeßparameter, entsprechend repräsentierende Meßwerte erzeugen. Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 317 340, der JP-A 8-136311, der JP-A 9-015015, der US-A 2007/0119264, der US-A 2007/0119265, der US-A 2007/0151370, der US-A 2007/0151371, der US-A 2007/0186685, der US-A 2008/0034893, der US-A 2008/0141789, US-A 46 80 974, der US-A 47 38 144, der US-A 47 77 833, der US-A 48 01 897, der US-A 48 23 614, der US-A 48 79 911, der US-A 50 09 109, der US-A 50 24 104, der US-A 50 50 439, der US-A 52 91 792, der US-A 53 59 881, der US-A 53 98 554, der US-A 54 76 013, der US-A 55 31 126, der US-A 56 02 345, der US-A 56 91 485, der US-A 57 34 112, der US-A 57 96 010, der US-A 57 96 011, der US-A 57 96 012, der US-A 58 04 741, der US-A 58 61 561, der US-A 58 69 770, der US-A 59 45 609, der US-A 59 79 246, der US-A 60 47 457, der US-A 60 92 429, der US-A 6073495, der US-A 63 111 36, der US-B 62 23 605, der US-B 63 30 832, der US-B 63 97 685, der US-B 65 13 393, der US-B 65 57 422, der US-B 66 51 513, der US-B 66 66 098, der US-B 66 91 583, der US-B 68 40 109, der US-B 68 68 740, der US-B 68 83 387, der US-B 70 17 424, der US-B 70 40 179, der US-B 70 73 396, der US-B 70 77 014, der US-B 70 80 564, der US-B 71 34 348, der US-B 72 16 550, der US-B 72 99 699, der US-B 73 05 892, der US-B 73 60 451, der US-B 73 92 709, der US-B 74 06 878, der WO-A 00/14 485, der WO-A 01/02 816, der WO-A 2004/072588, der WO-A 2008/013545, der WO-A 2008/07 7574, der WO-A 95/29386, der WO-A 95/16897 oder der WO-A 99 40 394 beschrieben. Jeder der darin gezeigten Meßwandler umfaßt wenigstens ein in einem Meßwandler-Gehäuse untergebrachtes, im wesentlichen gerades oder gekrümmtes Meßrohr zum Führen des, gegebenenfalls auch extrem schnell oder extrem langsam strömenden, Mediums. Im Betrieb des Meßsystems wird das wenigstens ein Meßrohr zwecks Generierung von durch das hindurchströmende Medium mit beeinflußten Schwingungsformen vibrieren gelassen.

Bei Meßwandlern mit zwei Meßrohren sind diese zumeist über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden. Bei Meßwandlern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßwandlers ist zumeist allein mittels der zwei Verbindungsrohrstücke, über die das Meßrohr im Betrieb mit der Prozeßleitung kommuniziert, in einem schutzgebenden Meßwandler-Gehäuse gehalten, insb. in einer Schwingungen des Innenteils relativ zum Meßwandler-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet. Bei marktgängigen Meßwandlern der vorgenannten Art ist zumeist auch der Gegenschwinger im wesentlichen rohrförmig und als im wesentlichen gerader Hohlzylinder ausgebildet, der im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Als angeregte Schwingungsform - dem sogenannten Nutzmode - wird bei Meßwandlern mit gekrümmtem, z.B.

U-, V- oder Ω-artig geformtem, Meßrohr üblicherweise jene Eigenschwingungsform gewählt, bei denen das Meßrohr zumindest anteilig bei einer niedrigsten natürlichen Resonanzfrequenz um eine gedachte Längsachse des Meßwandlers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem das Meßrohr zumindest anteilig Biegeschwingungen im wesentlichen in einer einzigen gedachten Schwingungsebene ausführt, so daß die Schwingungen im Coriolismode dementsprechend als zu den Nutzmodeschwingungen komplanare Biegeschwingungen gleicher Schwingfrequenz ausgebildet sind. Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, insb. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten primären Meßwerten Massendurchflußrate, Dichte und Viskosität abgeleitete Meßgrößen, wie etwa gemäß der US-B 65 13 393 die Reynoldszahl zu ermittelt werden.

Zum Erregen von Schwingungen des wenigstens einen Meßrohrs weisen Meßwandler vom Vibrationstyp des weiteren eine im Betrieb von einem von der erwähnten Treiberelektronik generierten und entsprechend konditionierten elektrischen Treibersignal, z.B. einem geregelten Strom, angesteuerte Erregeranordnung auf, die das Meßrohr mittels wenigstens eines im Betrieb von einem Strom durchflossenen, auf das Meßrohr praktisch direkt einwirkenden elektromechanischen, insb. elektro-dynamischen, Schwingungserregers zu Biegeschwingungen im Nutzmode anregt. Desweiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen des wenigstens einen Meßrohrs, insb. denen im Coriolismode, und zum Erzeugen von vom zu erfassenden Prozeßparameter, wie etwa dem Massedurchfluß oder der Dichte, beeinflußten, als Primärsignale des Meßwandlers dienenden elektrischen Sensorsignalen. Wie beispielsweise in der US-B 72 16 550 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Die Erregeranordnung von Meßwandlern der in Rede stehenden Art weist üblicherweise wenigstens einen elektrodynamischen und/oder differentiell auf das wenigstens eine Meßrohr und den ggf. vorhandenen Gegenschwinger oder das ggf. vorhandene andere Meßrohr einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen - bei Meßwandlern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie im wesentlichen mittig an das wenigstens eine Meßrohr angreift. Dabei ist der Schwingungserreger und insoweit die Erregeranordnung, wie beispielsweise auch bei den in der US-A 57 96 010, der US-B 68 40 109, der US-B 70 77 014 oder der US-B 70 17 424 vorgeschlagenen Meßwandlern gezeigt, zumeist zumindest punktuell entlang einer gedachten mittigen Umfangslinie des Meßrohrs außen an diesem fixiert. Alternativ zu einer mittels eher zentral und direkt auf das Meßrohr wirkenden Schwingungserregern gebildeten Erregeranordnung können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden. Bei den meisten marktgängigen Meßwandlern vom Vibrationstyp sind die Schwingungssensoren der Sensoranordnung, wie bereits angedeutet, zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen über den Gegenschwinger hin zum Meßwandler-Gehäuse geführt sind.

Wie u.a. in den eingangs erwähnten US-B 74 06 878, US-B 73 05 892, US-B 71 34 348, US-B 65 13 393, US-A 58 61 561, US-A 53 59 881 bzw. WO-A 2004/072588 diskutiert, kann ein weiterer, für den Betrieb des Meßsystems als solches und/oder für den Betrieb der Anlage, in der das Meßsystem installiert ist, durchaus relevanter Parameter ein - beispielsweise durch den Meßwandler und insoweit das Meßsystems selbst provozierter - Druckverlust in der Strömung sein; dies im besonderen auch für den Fall, daß das Medium zwei- oder mehrphasig ausgebildet ist, etwa als Flüssigkeits-Gas-Gemisch, und/oder daß im Betrieb mit unerwünschter Kavitation infolge Unterschreitens eines minimalen statischen Drucks im strömenden Medium zu rechnen bzw. diese unbedingt zu vermeiden ist. Bei den in der US-A 53 59 881 oder der US-B 74 06 878 gezeigten Meßsystemen wird eine über dem Meßwandler abfallende Druckdifferenz im Betrieb beispielsweise dadurch ermittelt, daß an einem ersten Druckmeßpunkt im Einlaßbereich des Meßwandlers bzw. unmittelbar stromaufwärts desselben mittels eines ersten Drucksensor ein erster statischer Druck im strömenden Medium und an einem zweiten Druckmeßpunkt im Auslaßbereich des Meßwandlers bzw. unmittelbar stromabwärts desselben mittels eines zusätzlichen zweiten Drucksensors ein zweiter statischer Druck im strömenden Medium erfaßt und, mittels hydraulischem Druckmeßwerk und/oder mittels der jeweiligen Umformer-Elektronik wiederkehren in einen entsprechenden Druckdifferenz-Meßwert gewandelt werden. In der US-B 73 05 892 bzw. der US-B 71 34 348 ist ferner ein mittels eines Meßwandlers vom Vibrationstyp durchführbares Verfahren zur Messung einer Druckdifferenz beschrieben, bei dem anhand einer Schwingungsantwort des wenigstens einen Meßrohrs auf eine multimodale Schwingungserregung sowie in der Umformer-Elektronik hinterlegter physikalisch-mathematisch Modelle für eine Dynamik des - hier als Coriolis-Massendurchfluß-Meßgerät ausgebildeten - Meßsystems ein Druck bzw. ein Druckabfall im durch den Meßwandler strömenden Medium ermittelt wird.

Ein Nachteil der aus dem Stand der Technik zur Druckmessung, insb. auch zur Druckdifferenzmessung, mittels Meßwandler vom Vibrationstyp bekannten Lösungen ist allerdings darin zu sehen, daß entweder entsprechend modifizierte Erregeranordnungen und/oder entsprechend modifizierte Treiberelektronik zu verwenden oder aber zusätzliche Drucksensoren vorzusehen sind. Damit einhergehend kann sich sowohl der Konstruktionsaufwand des Meßsystems selbst als auch der Experimentieraufwand bei der Kalibrierung solcher Meßsysteme in extremen Maße erhöhen, da die zugrundegelegten physikalisch-mathematisch Modelle für die Druck- bzw. die Druckdifferenzmessung zwecks Erzielung einer hohen Meßgenauigkeit sehr komplex sind und damit einhergehend ein Vielzahl zusätzlich zu kalibrierender Koeffizienten aufweisen, ggf. auch im Zuge einer erst vor Ort am installierten Meßsystem durchgeführten Naß-Kalibration Weiteren Stand der Technik bilden EP 1659377, WO 2009/134268 und WO 00/36379.

Ein Aufgabe der Erfindung besteht daher darin, mittels Meßwandler vom Vibrationstyp gebildet Meßsysteme dahingehend zu verbessern, daß damit eine, zumindest für Zwecke der Detektion bzw. Alarmierung unerwünscht hoher Druckabfälle im strömenden Medium ausreichend genaue, ggf. auch eine im Sinne des Erzeugens validierter Meßwerte hoch präzise, Messung einer Druckdifferenz im hindurchströmenden Medium ermöglicht ist; dies im besonderen auch unter Verwendung der in solchen Meßsystemen bewährten Meßtechnik, wie etwa etablierte Schwingungssensorik und/oder -aktorik, oder auch bewährten Technologien und Architekturen etablierter Umformer-Elektroniken.

Die Aufgabe wird durch die Merkmale von Anspruch 1 und die Verfahrensschritte von Anspruch 18 gelöst.

Zur Lösung der Aufgabe besteht die Erfindung in einem Meßsystem, beispielsweise Kompakt-Meßgerät und/oder Coriolis-Massedurchfluß-Meßgerät, für, beispielsweise in Rohrleitungen, strömende Medien, welches Meßsystem einen im Betrieb von einem Medium, beispielsweise einem Gas und/oder einer Flüssigkeit, einer Paste oder einem Pulver oder einem anderen fließfähigem Material, durchströmten Meßwandler vom Vibrationstyp zum Erzeugen von mit Parametern des strömenden Mediums, beispielsweise einer Massendurchflußrate, einer Dichte und/oder einer Viskosität, korrespondierenden Primärsignalen sowie eine mit dem Meßwandler elektrisch gekoppelte Umformer-Elektronik (ME) zum Ansteuern des Meßwandlers und zum Auswerten von vom Meßwandler gelieferten Primärsignalen umfaßt. Der Meßwandler weist wenigstens ein Meßrohr zum Führen von strömendem Medium, wenigstens einen elektromechanischen, beispielsweise elektrodynamischen, Schwingungserreger zum Anregen und/oder Aufrechterhalten von Vibrationen des wenigstens einen Meßrohrs, beispielsweise von Biegeschwingungen des wenigstens einen Meßrohrs um eine ein einlaßseitiges erstes Meßrohrende des Meßrohrs und ein auslaßseitiges zweites Meßrohrende des Meßrohrs imaginär verbindende gedachte Schwingungsachse mit einer natürlichen Resonanzfrequenz des Meßwandlers, einen, beispielsweise elektrodynamischen, ersten Schwingungssensor zum Erfassen von, beispielsweise einlaßseitigen, Vibrationen zumindest des wenigstens einen Meßrohrs und zum Erzeugen eines, beispielsweise einlaßseitigen, Vibrationen zumindest des wenigstens einen Meßrohrs repräsentierenden ersten Primärsignals des Meßwandlers, und einen, beispielsweise elektrodynamischen, zweiten Schwingungssensor zum Erfassen von, beispielsweise auslaßseitigen, Vibrationen zumindest des wenigstens einen Meßrohrs und zum Erzeugen eines, beispielsweise auslaßseitigen, Vibrationen zumindest des wenigstens einen Meßrohrs repräsentierenden zweiten Primärsignals des Meßwandlers auf. Die Umformer-Elektronik wiederum liefert wenigstens ein Vibrationen, beispielsweise Biegeschwingungen, des wenigstens einen Meßrohrs bewirkendes Treibersignal für die den Schwingungserreger liefert, und generiert mittels des ersten Primärsignals und mittels des zweiten Primärsignals sowie unter Verwendung eines, beispielsweise in einem flüchtigen Datenspeicher der Umformer-Elektronik intern vorgehaltenen und/oder im Betrieb mittels des Treibersignals und/oder mittels wenigstens eines der Primärsignale erzeugten, eine Reynoldszahl, Re, für im Meßwandler strömendes Medium repräsentierenden Reynoldszahl-Meßwerts einen Druckdifferenz-Meßwert, der eine zwischen zwei vorgegebenen, beispielsweise innerhalb des Meßwandlers lokalisierten, Referenzpunkten im strömenden Medium auftretende Druckdifferenz repräsentiert, beispielsweise derart, daß ein erster der beiden Referenzpunkte einlaßseitig und ein zweiter der beiden Referenzpunkte auslaßseitig im Meßwandler lokalisiert sind. Darüberhinaus besteht die Erfindung in einem Verfahren zum Messen einer innerhalb eines strömenden Mediums auftretenden Druckdifferenz, welches Verfahren folgende Schritte umfaßt:

Strömenlassen des Mediums durch wenigstens ein Meßrohr;
Erzeugen eines eine Reynoldszahl, Re, für das strömende Medium repräsentierenden Reynoldszahl-Meßwerts, sowie
Verwenden des Reynoldszahl-Meßwerts zum Erzeugen eines Druckdifferenz-Meßwerts, der eine zwischen zwei, beispielsweise innerhalb des Meßwandler lokalisierten, Referenzpunkten im strömenden Medium auftretende Druckdifferenz repräsentiert.

Gemäss der Erfindung ist ferner vorgesehen, daß die Umformer-Elektronik den Reynoldszahl-Meßwert mittels des Treibersignals generiert.

Gemäss der Erfindung ist ferner vorgesehen, daß die Umformer-Elektronik den Reynoldszahl-Meßwert mittels des ersten Primärsignals und/oder mittels des zweiten Primärsignals generiert.

Nach einer Ausgestaltung des Meßsystems der Erfindung ist ferner vorgesehen, daß die Umformer-Elektronik den Druckdifferenz-Meßwerts unter Verwendung eines, beispielsweise in einem flüchtigen Datenspeicher der Umformer-Elektronik intern vorgehaltenen und/oder im Betrieb mittels des Treibersignal und/oder mittels wenigstens eines der Primärsignale erzeugten, Viskositäts-Meßwert generiert, der eine Viskosität, $\eta$, von im Meßwandler strömendem Medium repräsentiert. Diese Ausgestaltung der Erfindung weiterbildend ist ferner vorgesehen, daß die Umformer-Elektronik den Viskositäts-Meßwert mittels des Treibersignals generiert und/oder daß die Umformer-Elektronik den Viskositäts-Meßwert unter Verwendung des ersten Primärsignals und/oder des zweiten Primärsignals generiert.

Nach einer Ausgestaltung des Meßsystems der Erfindung ist ferner vorgesehen, daß die Umformer-Elektronik zur Ermittlung des Druckdifferenz-Meßwerts mittels des ersten Primärsignals und mittels des zweiten Primärsignals einen Phasendifferenz-Meßwert generiert, der eine zwischen dem ersten Primärsignal und dem zweiten Primärsignal existierenden, beispielsweise von einer Massendurchflußrate, $m$, von im Meßwandler strömendem Medium abhängige, Phasendifferenz, $\Delta\varphi_l$, repräsentiert.

Nach einer Ausgestaltung des Meßsystems der Erfindung ist ferner vorgesehen, daß die Umformer-Elektronik zur Ermittlung des Druckdifferenz-Meßwerts und/oder zur Erzeugung eines eine Dichte, $\rho$, von im Meßwandler strömendem Medium repräsentierenden Dichte-Meßwerts anhand wenigstens eines der Primärsignale und/oder anhand des wenigstens einen Treibersignals einen Frequenz-Meßwert generiert, der eine Schwingungsfrequenz, $f_{exc}$, von Vibrationen des wenigstens einen Meßrohrs, beispielsweise von Biegeschwingungen des wenigstens einen Meßrohrs um eine ein einlaßseitiges erstes Meßrohrende des Meßrohrs und ein auslaßseitiges zweites Meßrohrende des Meßrohrs imaginär verbindende gedachte Schwingungsachse mit einer natürlichen Resonanzfrequenz des Meßwandlers, repräsentiert.

Nach einer Ausgestaltung des Meßsystems der Erfindung ist ferner vorgesehen, daß die Umformer-Elektronik zur Ermittlung des Druckdifferenz-Meßwerts mittels des ersten Primärsignals und mittels des zweiten Primärsignals einen Massendurchfluß-Meßwert generiert, der eine Massendurchflußrate, $m$, von im Meßwandler strömendem Medium repräsentiert,

Nach einer Ausgestaltung des Meßsystems der Erfindung ist ferner vorgesehen, daß die Umformer-Elektronik den Reynoldzahl-Meßwert unter Verwendung eines eine Massendurchflußrate, $m$, von im Meßwandler strömendem Medium repräsentierenden Massendurchfluß-Meßwerts generiertet.

Nach einer Ausgestaltung des Meßsystems der Erfindung ist ferner vorgesehen, daß die Umformer-Elektronik den Reynoldzahl-Meßwert unter Verwendung eines eine Viskosität, $\eta$, von im Meßwandler strömendem Medium repräsentierenden Viskositäts-Meßwerts generiert.

Nach einer Ausgestaltung des Meßsystems der Erfindung ist ferner vorgesehen, daß die Umformer-Elektronik den Reynoldzahl-Meßwert unter Verwendung sowohl eines eine Massendurchflußrate, $m$, von im Meßwandler strömendem Medium repräsentierenden Massendurchfluß-Meßwerts als auch eines eine Viskosität, $\eta$, von im Meßwandler strömendem Medium repräsentierenden Viskositäts-Meßwerts generiert.

Nach einer Ausgestaltung des Meßsystems der Erfindung ist ferner vorgesehen, daß die Umformer-Elektronik den Druckdifferenz-Meßwerts unter Verwendung eines, beispielsweise in einem flüchtigen Datenspeicher der Umformer-Elektronik intern vorgehaltenen und/oder im Betrieb mittels des Treibersignal und/oder mittels wenigstens eines der Primärsignale erzeugten, Dichte-Meßwert generiert, der eine Dichte, $\rho$, von im Meßwandler strömendem Medium repräsentiert.

Nach einer Ausgestaltung des Meßsystems der Erfindung ist ferner vorgesehen, daß die Umformer-Elektronik zur Ermittlung des Druckdifferenz-Meßwerts mittels des ersten Primärsignals und mittels des zweiten Primärsignals einen Strömungsenergie-Meßwert generiert, der eine von einer Dichte, $\rho$, und einer Strömungsgeschwindigkeit, $U$, des im Meßwandler strömenden Mediums abhängige kinetische Energie, $\rho U^2$, von im Meßwandler strömendem Medium repräsentiert.

Nach einer Ausgestaltung des Meßsystems der Erfindung ist ferner vorgesehen, daß die Umformer-Elektronik zur Ermittlung des Druckdifferenz-Meßwerts einen Druckabfall-Koeffizienten generiert, der einen von der momentanen Reynoldszahl, Re, des strömenden Mediums abhängigen Druckabfall über dem Meßwandler, bezogen auf eine momentane kinetische Energie des im Meßwandler strömenden Mediums repräsentiert.

Nach einer Ausgestaltung des Meßsystems der Erfindung ist ferner vorgesehen, daß die Umformer-Elektronik unter Verwendung des Druckdifferenz-Meßwerts und anhand eines, beispielsweise in einem flüchtigen Datenspeicher der Umformer-Elektronik intern vorgehaltenen, ersten Druck-Meßwerts, der einen, beispielsweise stromaufwärts eines Auslaßendes des Meßwandlers und/oder stromabwärts eines Einlaßendes des Meßwandlers, im strömenden Medium herrschenden, beispielsweise mittels eines mit der Umformer-Elektronik kommunizierenden Drucksensors gemessenen und/oder mittels des ersten und zweiten Primärsignals des Meßwandlers ermittelten, ersten Druck repräsentiert, einen zweiten Druck-Meßwert generiert, der einen, beispielsweise minimalen und/oder für das Meßsystem als kritisch eingestuften, statischen Druck, $p_{krit}$, innerhalb des strömenden Mediums repräsentiert. Diese Ausgestaltung der Erfindung weiterbildend ist ferner vorgesehen, daß die Umformer-Elektronik unter Verwendung des zweiten Druck-Meßwerts einen Alarm generiert, der ein Unterschreiten eines vorab definierten, minimal zulässigen statischen Drucks im Medium, beispielsweise visuell und/oder akustisch wahrnehmbar, signalisiert; und/oder daß die Umformer-Elektronik unter Verwendung des zweiten Druck-Meßwerts einen Alarm generiert, der ein, beispielsweise sich anbahnendes, Auftreten von Kavitation im Medium, beispielsweise visuell und/oder akustisch wahrnehmbar, signalisiert.

Nach einer Ausgestaltung des Meßsystems der Erfindung umfaßt dieses zum Erzeugen eines einen im strömenden Medium herrschenden statischen Druck repräsentierenden Druck-Meßwerts weiters einen dem Erfassen eines, beispielsweise stromaufwärts eines Einlaßendes des Meßwandlers oder stromabwärts eines Auslaßendes des Meßwandlers, im in einer das Medium führenden Rohrleitung herrschenden statischen Drucks dienenden, im Betrieb mit der Umformer-Elektronik kommunizierenden Drucksensor.

Nach einer Ausgestaltung des Meßsystems der Erfindung ist ferner vorgesehen, daß die Umformer-Elektronik unter Verwendung des Druckdifferenz-Meßwerts einen Alarm generiert, der ein Überschreiten einer vorab definierten, maximal zulässigen Absenkung eines statischen Drucks im durch den Meßwandler strömenden Medium, beispielsweise visuell und/oder akustisch wahrnehmbar, signalisiert; und/oder daß die Umformer-Elektronik unter Verwendung des Druckdifferenz-Meßwerts einen Alarm generiert, der einen durch den Meßwandler provozierten, zu hohen Druckabfall im Medium, beispielsweise visuell und/oder akustisch wahrnehmbar, signalisiert.

Nach einer Ausgestaltung der Erfindung ist ferner vorgesehen, daß der Meßwandler weiters ein Meßwandler-Gehäuse mit einem, insb. einen Anschlußflansch für ein Medium dem Meßwandler zuführendes Leitungssegment aufweisenden, einlaßseitigen ersten Gehäuseende und einem, insb. einen Anschlußflansch für ein Medium vom Meßwandler abführendes Leitungssegment aufweisenden, auslaßseitigen zweiten Gehäuseende. Diese Ausgestaltung der Erfindung weiterbildend ist ferner vorgesehen, daß das einlaßseitige erste Gehäuseende des Meßwandler-Gehäuses mittels eines zwei jeweils voneinander beabstandeten Strömungsöffnungen aufweisenden einlaßseitigen ersten Strömungsteiler und das auslaßseitige zweite Gehäuseende des Meßwandler-Gehäuses mittels eines zwei jeweils voneinander beabstandeten Strömungsöffnungen aufweisenden auslaßseitigen zweiten Strömungsteilers gebildet sind, und daß der Meßwandler zwei zueinander parallele Meßrohre zum Führen von strömendem Medium aufweist, von denen ein erstes Meßrohr mit einem einlaßseitigen ersten Meßrohrende in eine erste Strömungsöffnung des ersten Strömungsteilers und mit einem auslaßseitigen zweiten Meßrohrende in eine erste Strömungsöffnung des zweiten Strömungsteilers mündet, und ein zweites Meßrohr mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers mündet.

Nach einer Ausgestaltung des Verfahrens der Erfindung umfaßt diese weiters Schritte des Anregens des wenigstens einen Meßrohrs zu Vibrationen, beispielsweise Biegeschwingungen um eine ein einlaßseitiges erstes Meßrohrende des Meßrohrs und ein auslaßseitiges zweites Meßrohrende des Meßrohrs imaginär verbindende gedachte Schwingungsachse; sowie des Erzeugens eines einlaßseitige Vibrationen zumindest des wenigstens einen Meßrohrs repräsentierenden ersten Primärsignals sowie eines auslaßseitige Vibrationen zumindest des wenigstens einen Meßrohrs repräsentierenden zweiten Primärsignals. Das Verfahren umfasst weiters einen Schritt des Verwendens des ersten Primärsignals und/oder des zweiten Primärsignals zum Erzeugen des Reynoldszahl-Meßwerts, insb. auch zum Erzeugen eines eine Dichte des strömenden Mediums repräsentierenden Dichte-Meßwerts und/oder zum Erzeugen eines eine Massendurchflußrate des strömenden Mediums repräsentierenden Massendurchfluß-Meßwerts sowie das Verwenden des Reynoldszahl-Meßwerts zum Erzeugen eines Druckdifferenz-Meßwerts, der eine zwischen zwei, insb. innerhalb des Meßwandler lokalisierten, Referenzpunkten im strömenden Medium auftretende Druckdifferenz repräsentiert.

Ein Grundgedanke der Erfindung besteht darin, unter Verwendung einiger weniger, für die Messung strömender Medium etablierter Meßwerte, wie der Massendurchflußrate, der Dichte, der Viskosität und/oder der Reynoldszahl, die in Meßsystemen der in Rede stehenden Art typischerweise ohnehin vorliegen, insb. auch intern ermittelt werden, und/oder anhand von einigen wenigen, mittels der Umformer-Elektronik solcher Meßsysteme typischerweise intern generierten Betriebsparametern, wie einer Phasendifferenz zwischen den ein- und auslaßseitige Schwingungen des wenigstens einen Meßrohrs repräsentierenden Primärsignalen, deren Signalfrequenz und/oder -amplitude, oder den davon typischerweise ohnehin abgeleiteten, als eine weitere interessierende Meßgröße einen Druckdifferenz zu ermitteln. Die Erfindung basiert dabei auch auf der überraschenden Erkenntnis, daß sogar allein anhand vorgenannter Betriebsparameter bzw. den davon abgeleiteten, in Meßsystemen der in Rede stehenden Art typischerweise ohnehin ermittelten Meßwerten sowie einigen wenigen vorab speziell - etwa im Zuge einer ohnehin durchzuführenden Naß-Kalibration - zu bestimmenden meßsystemspezifischen Festwerten Druckdifferenzen im durch den Meßwandler strömenden Medium mit einer auch zu Zwecken der Alarmierung kritischer Betriebszustände, wie etwa Kavitation im strömenden Medium, ausreichend guten Meßgenauigkeit ermittelt werden können; dies auch über einen sehr weiten Reynoldszahlbereich, also sowohl für laminare als auch turbulente Strömung. Ein Vorteil der Erfindung besteht dabei im besonderen darin, daß zur Realisierung der erfindungsgemäßen Druckdifferenz-Messung sowohl auf betriebsbewährte konventionelle Meßwandler als auch auf betriebsbewährte konventionelle - hinsichtlich der für die Auswertung implementierten Software selbstverständlich entsprechend angepaßte - Umformer-Elektroniken zurückgegriffen werden kann.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugzeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

Fig. 1a, b      eine Variante eines als Kompakt-Meßgerät ausgebildetes Meßsystem für in Rohrleitungen strömende Medien in verschiedenen Seitenansichten;

Fig. 2a, b      eine weitere Variante eines als Kompakt-Meßgerät ausgebildetes Meßsystem für in Rohrleitungen strömende Medien in verschiedenen Seitenansichten;

Fig. 3      schematisch nach Art eines Blockschaltbildes eine, insb. auch für ein Meßsystem gemäß den Fig. 1a, 1b, 2a, 2b, geeignete, Umformer-Elektronik mit daran angeschlossenem Meßwandler vom Vibrationstyp;

Fig. 4, 5      in, teilweise geschnittenen bzw. perspektivischen, Ansichten eine Variante eines, insb. für ein Meßsystem gemäß den Fig. 1a, 1b geeigneten, Meßwandlers vom Vibrations-Typ;

Fig. 6, 7      in, teilweise geschnittenen bzw. perspektivischen, Ansichten eine weitere Variante eines, insb. für ein Meßsystem gemäß den Fig. 2a, 2b geeigneten, Meßwandlers vom Vibrations-Typ;

Fig. 8 bis 11      Ergebnisse von im Zusammenhang mit der Erfindung, insb. auch unter Anwendung von computerbasierten Simulationsprogrammen und/oder mittels realer Meßsysteme im Labor, durchgeführten experimentellen Untersuchungen bzw. daraus abgeleitete, der Ermittlung einer Druckdifferenz in einem durch einen Meßwandler vom Vibrationstyp - etwa gemäß den Fig. 4, 5 bzw. 6, 7 - hindurchströmenden Medium dienende Kennlinienverläufe; und

Fig. 12    experimentell, insb. auch unter Anwendung von computerbasierten Simulationsprogrammen, ermittelte Druckverlustprofile in einem konventionellen Meßwandler vom Vibrationstyp.

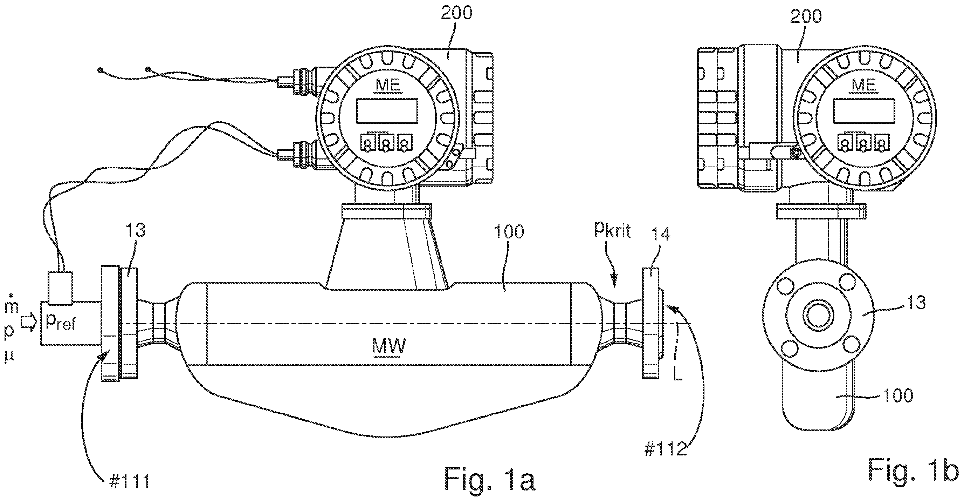

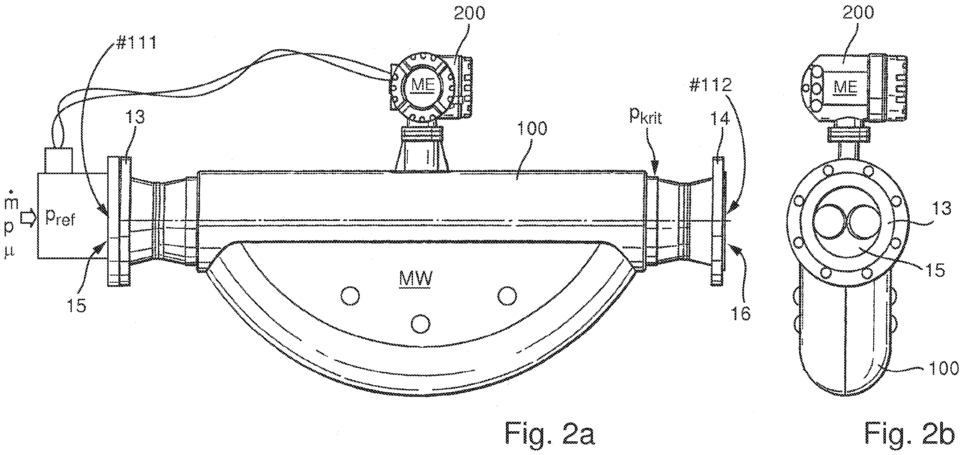

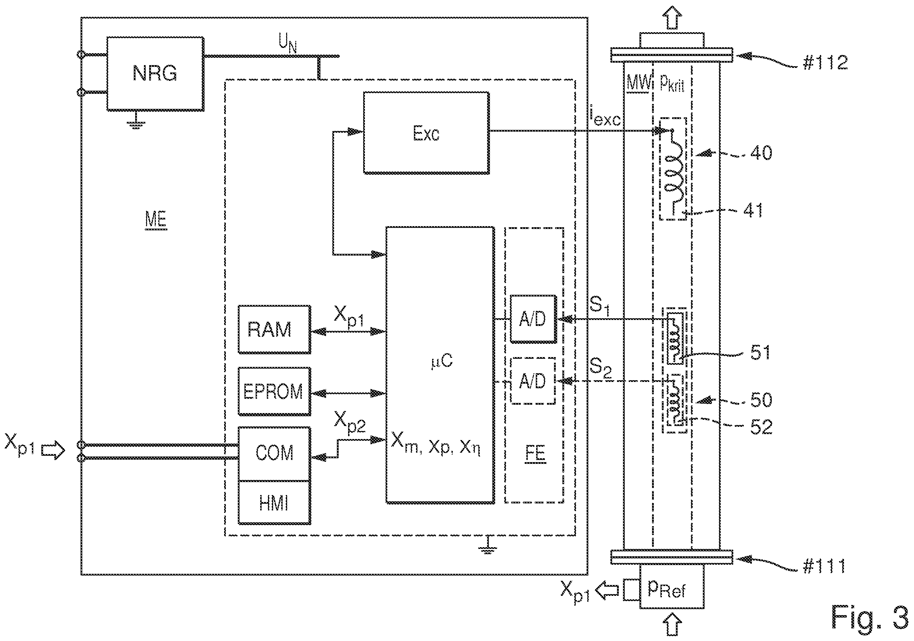

In den Fig. 1a, 1b bzw. 2a, 2b ist jeweils eine Variante eines in eine Prozeßleitung, etwa eine Rohrleitung einer industriellen Anlage, einfügbares, beispielsweise mittels Coriolis-Massendurchflußmeßgerät, Dichtemeßgerät, Viskositätsmeßgerät oder dergleichen gebildetes, Meßsystem für fließfähige, insb. fluide, Medien, dargestellt, das im besonderen dem Messen und/oder Überwachen einer Druckdifferenz von einem in der Prozeßleitung strömenden Medium dient, ggf. auch noch dem Messen und/oder Überwachen wenigstens einer weiteren physikalischen Meßgröße des Mediums, wie etwa einer Massendurchflußrate, einer Dichte, einer Viskosität oder dergleichen. Das - hier mittels In-Line-Meßgerät in Kompaktbauweise realisierte - Meßsystem umfaßt dafür einen über ein Einlaßende #111 sowie ein Auslaßende #112 an die Prozeßleitung angeschlossenen Meßwandler MW vom Vibrationstyp, welcher Meßwandler im Betrieb entsprechend vom zu messenden Medium, wie etwa einer niedrigviskosen Flüssigkeit und/oder einer hochviskosen Paste und/oder einem Gas, durchströmt und an eine, insb. im Betrieb von extern via Anschlußkabel und/oder mittels interner Energiespeicher mit elektrischer Energie versorgte, Umformer-Elektronik ME des Meßsystems angeschlossen ist. Diese weist, wie in Fig. 3 schematisch nach Art eines Blockschaltbildes dargestellt, eine dem Ansteuern des Meßwandlers dienende Treiber-Schaltung Exc sowie eine Primärsignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung $\mu$C des Meßsystems elektrisch angeschlossen ist, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung $\mu$C sowie weitere, dem Betrieb des Meßsystems dienende Elektronik-Komponenten der Umformer-Elektronik, wie etwa interne Energieversorgungsschaltungen NRG zum Bereitstellen interner Versorgungsspannungen $U_N$ und/oder dem Anschluß an ein übergeordnetes Meßdatenverarbeitungssystem und/oder einem Feldbus dienenden Kommunikationsschaltungen COM, sind ferner in einem entsprechenden, insb. schlag- und/oder auch explosionsfest und/oder hermetisch dicht ausgebildeten, Elektronikgehäuse 200 untergebracht. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, insb. programmierbare und/oder fernparametrierbare, Umformer-Elektronik ME ferner so ausgelegt sein, daß sie im Betrieb des In-Line-Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Umformer-Elektronik ME beispielsweise eine solche interne Energieversorgungsschaltung NRG aufweisen, die im Betrieb von einer im Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann. Für den Fall, daß das Meßsystem für eine Ankopplung an ein Feldbus- oder ein anderes Kommunikationssystem vorgesehen ist, kann die Umformer-Elektronik ME eine entsprechende Kommunikations-Schnittstelle COM für eine Datenkommunikation gemäß einem der einschlägigen Industriestandards aufweisen. Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twistedpair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

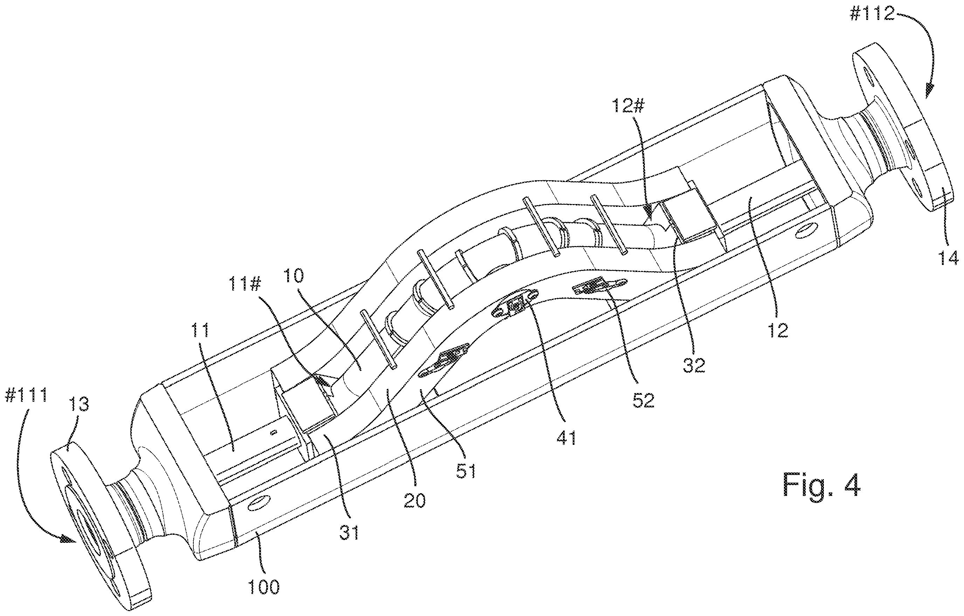

In den Fig. 4 und 5 bzw. 6 und 7 sind zur weiteren Erläuterung der Erfindung ein erstes bzw. ein zweites Ausführungsbeispiel für einen für die Realisierung des Meßsystems geeigneten Meßwandler MW vom Vibrationstyp schematisch dargestellt. Der Meßwandler MW dient generell dazu, in einem hindurchströmenden Medium, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so z.B. ein Massedurchfluß $m$, eine Dichte $\rho$ und/oder eine Viskosität $\eta$ des Mediums gemessen werden. Jeder der Meßwandler umfaßt dafür jeweils ein in einem Meßwandler-Gehäuse 100 angeordnetes, die physikalisch-elektrische Konvertierung des wenigstens einen zu messenden Parameters eigentlich bewirkendes Innenteil. Zusätzlich zur Aufnahme des Innenteils kann das Meßwandlergehäuse 100 zudem auch dazu dienen, das Elektronikgehäuse 200 des In-line-Meßgeräts mit darin untergebrachter Treiber- und Auswerte-Schaltung zu haltern.

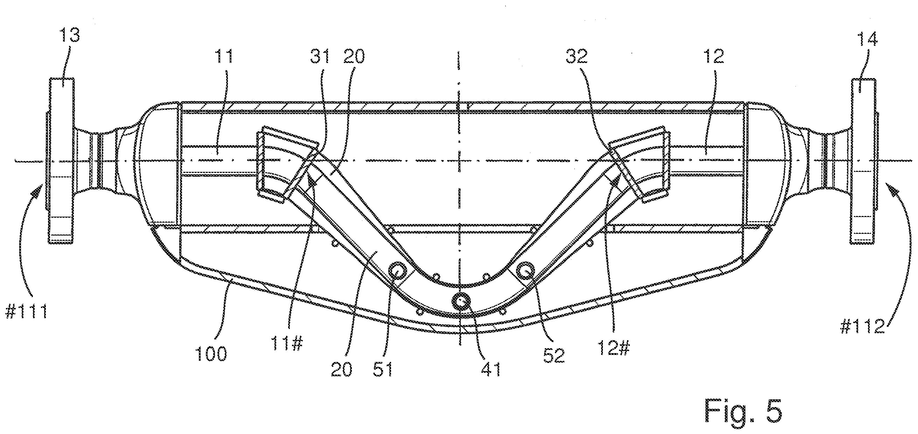

Zum Führen von strömendem Mediums umfaßt das Innenteil des Meßwandlers generell wenigstens ein erstes - im in den Fig. 4 und 5 gezeigten Ausführungsbeispiel einziges zumindest abschnittsweise gekrümmtes - Meßrohr 10, das sich zwischen einem einlaßseitigen ersten Meßrohrende 11# und einem auslaßseitigen zweiten Meßrohrende 12# mit einer Schwinglänge erstreckt und zum Erzeugen vorgenannter Reaktionskräfte im Betrieb zumindest über seine Schwinglänge vibrieren gelassen und dabei, um eine statische Ruhelage oszillierend, wiederholt elastisch verformt wird. Die Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des Meßrohrs), im Falle eines gekrümmten Meßrohrs also einer gestreckten Länge des Meßrohrs 10.

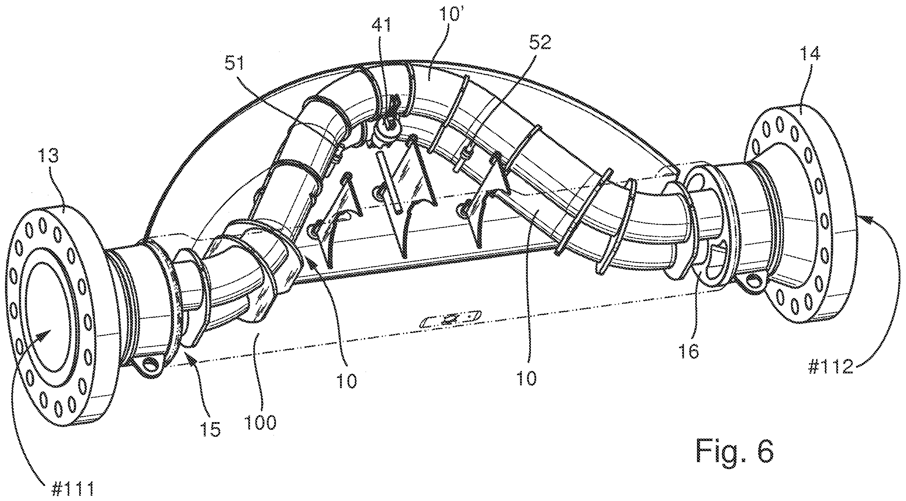

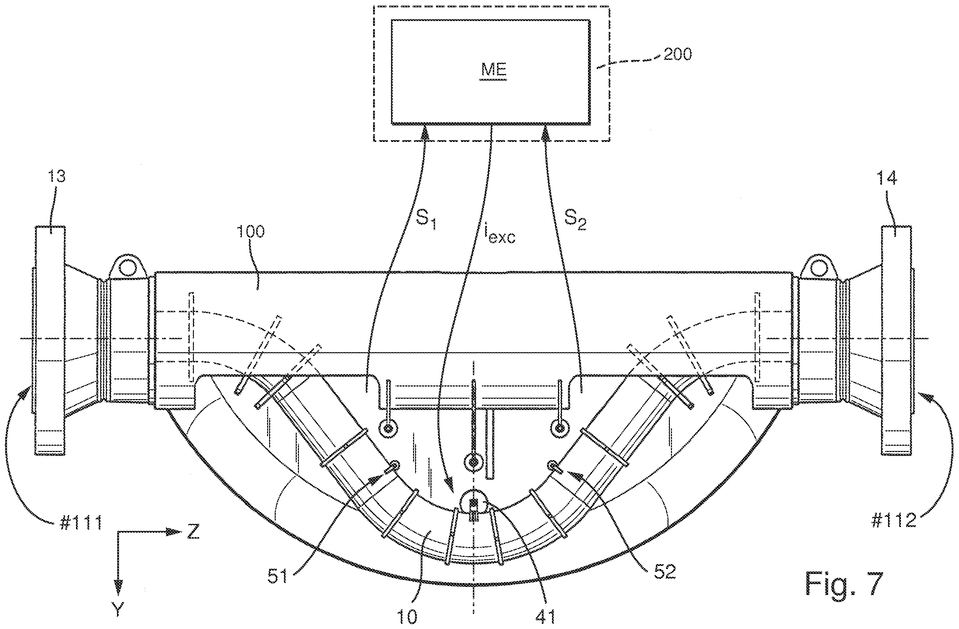

Es sei an dieser Stelle ausdrücklich darauf hingewiesen, daß - obwohl der Meßwandler im in den Fig. 4 und 5 gezeigten Ausführungsbeispiel lediglich ein einziges gekrümmtes Meßrohr aufweist und zumindest insoweit in seinem mechanischen Aufbau wie auch seinem Wirkprinzip dem in den US-B 73 60 451 oder der US-B 66 66 098 vorgeschlagenen bzw. auch den seitens der Anmelderin unter der Typbezeichnung *"PROMASS H", "PROMASS P" oder "PROMASS S"* käuflich angebotenen Meßwandlern ähnelt - zur Realisierung der Erfindung selbstverständlich auch Meßwandler mit geradem und/oder mehr als einem Meßrohr dienen können, etwa vergleichbar den in den eingangs erwähnten US-A 60 06 609, US-B 65 13 393, US-B 70 17 424, US-B 68 40 109, US-B 69 20 798, US-A 57 96 011, US-A 57 31 527 oder US-A 56 02 345 gezeigten oder beispielsweise auch den seitens der Anmelderin unter der Typbezeichnung *"PROMASS I", "PROMASS M" bzw. "PROMASS E"* oder *"PROMASS F"* käuflich angebotenen Meßwandlern jeweils mit zwei parallelen Meßrohren. Demnach kann der Meßwandler auch ein einziges gerades Meßrohr oder wenigstens zwei, beispielsweise mittels eines einlaßseitigen Strömungsteilers und eines auslaßseitigen Strömungsteilers, ggf. zusätzlich auch noch mittels wenigstens eines einlaßseitigen Koppelelements und wenigstens eines auslaßseitigen Koppelelements, miteinander mechanisch gekoppelte und/oder einander baugleiche und/oder gekrümmte und/oder zueinander parallele, Meßrohre zum Führen von zu messendem Medium aufweisen, die im Betrieb zum Erzeugen der Primärsignale zumindest zeitweise vibrieren, etwa frequenzgleich auf einer gemeinsamen Schwingfrequenz, jedoch zueinander gegenphasig. Gemäß einer Weiterbildung der Erfindung umfaßt der Meßwandler, wie etwa in Fig. 6 und 7 schematisch dargestellt, daher zusätzlich zum ersten Meßrohr 10 eine zweites Meßrohr 10', daß unter Bildung einer ersten Kopplungszone einlaßseitig mittels eines, beispielsweise plattenförmigen, ersten Kopplerelements und unter Bildung einer zweiten Kopplungszone auslaßseitig mittels eines, beispielsweise plattenförmigen und/oder zum ersten Kopplerelement baugleichen, zweiten Kopplerelements mit dem ersten Meßrohr 10 mechanisch verbunden ist. Auch in diesem Fall definieren also die erste Kopplungszone jeweils ein einlaßseitiges erstes Meßrohrende 11#, 11'# jedes der zwei Meßrohre 10, 10' und die zweite Kopplungszone jeweils ein auslaßseitiges zweites Meßrohrende 12#, 12'# jedes der zwei Meßrohre 10, 10'. Da für den Fall, daß das Innenteil mittels zweier Meßrohre gebildet ist, jedes der beiden, insb. im Betrieb im wesentlichen gegenphasig zueinander oszillierenden und/oder zueinander parallelen und/oder hinsichtlich Form und Material baugleichen, Meßrohre 10, 10' dem Führen von zu messendem Medium dient, mündet jedes der zwei Meßrohre nach einer weiteren Ausgestaltung dieser zweiten Variante des erfindungsgemäßen Meßwandlers einlaßseitig in jeweils eine von zwei voneinander beabstandeten Strömungsöffnungen eines dem Aufteilen von einströmendem Medium in zwei Teilströmungen dienenden ersten Strömungsteiler 15 und auslaßseitig in jeweils eine von zwei voneinander beabstandeten Strömungsöffnungen eines dem Wiederzusammenführen der Teilströmungen dienenden zweiten Strömungsteilers 16, so daß also beide Meßrohre im Betrieb des Meßsystem gleichzeitig und parallel von Medium durchströmt sind. Im in den Fig. 6 und 7 gezeigten Ausführungsbeispiel sind die Strömungsteiler insoweit integraler Bestandteil des Meßwandlergehäuses, als mittels des ersten Strömungsteilers ein das Einlaßende #111 des Meßwandlers definierendes einlaßseitige erstes Gehäuseende und mittels des zweiten Strömungsteilers ein das Auslaßende #112 des Meßwandlers definierendes auslaßseitige zweite Gehäuseende gebildet sind.

Wie aus der Zusammenschau der Fign. 4 und 5 bzw. 6 und 7 ohne weiteres ersichtlich, ist das wenigstens eine Meßrohr 10 jeweils so geformt, daß vorgenannte Mittellinie, wie bei Meßwandlern der in Rede stehenden Art durchaus üblich, in einer gedachten Rohrebene des Meßwandlers liegt. Nach einer Ausgestaltung der Erfindung wird das wenigstens eine Meßrohr 10 im Betrieb dabei so vibrieren gelassen, daß es um eine Schwingungsachse, insb. in einem Biegeschwingungsmode, schwingt, die zu einer die beiden Meßrohrenden 11#, 12# imaginär verbindenden gedachten Verbindungsachse parallel oder koinzident ist. Das wenigstens eine Meßrohr 10 ist ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft, ggf. auch koinzidiert.

Das wenigstens eine, beispielsweise aus Edelstahl, Titan, Tantal bzw. Zirkonium oder einer Legierung davon hergestellte, Meßrohr 10 des Meßwandlers und insoweit auch eine innerhalb von Lumen verlaufende gedachte Mittellinie des Meßrohrs 10 kann z.B. im wesentlichen U-förmig oder, wie auch in der Fig. 4 und 5 bzw. 6 und 7 gezeigt, im wesentlichen V-förmig ausgebildet sein. Da der Meßwandler für eine Vielzahl unterschiedlichster Anwendungen, insb. im Bereich der industriellen Meß- und Automatisierungstechnik einsetzbar sein soll, ist ferner vorgesehen, daß das Meßrohr je nach Verwendung des Meßwandlers einen Durchmesser aufweist, der im Bereich zwischen etwa 1 mm und etwa 100 mm liegt.

Zur Minimierung von auf das mittels eines einzigen Meßrohrs gebildeten Innenteils wirkenden Störeinflüssen wie auch zur Reduzierung von seitens des jeweiligen Meßwandlers an die angeschlossene Prozeßleitung insgesamt abgegebener Schwingungsenergie umfaßt das Innenteil des Meßwandlers gemäß dem in den Fig. 4 und 5 gezeigten Ausführungsbeispiel desweiteren einen mechanisch mit dem - hier einzigen gekrümmten - Meßrohr 10 gekoppelten, beispielsweise ähnlich wie das Meßrohr U- bzw. V-förmige ausgebildete, Gegenschwinger 20. Dieser ist, wie auch in Fig. 2 gezeigt, vom Meßrohr 10 seitlich beabstandet im Meßwandler angeordnet und unter Bildung einer - letztlich vorgenanntes erstes Meßrohrende 11# definierenden - ersten Kopplungszone einlaßseitig und der unter Bildung einer - letztlich vorgenanntes zweites Meßrohrende 12# definierenden - zweiten Kopplungszone auslaßseitig jeweils am Meßrohr 10 fixiert. Der - hier im wesentlichen parallel zum Meßrohr 10 verlaufende, ggf. auch koaxial zu diesem angeordnete - Gegenschwinger 20 ist aus einem zum Meßrohr hinsichtlich des Wärmeausdehnungsverhaltens kompatiblen Metall, wie etwa Stahl, Titan bzw. Zirkonium, hergestellt und kann dabei beispielsweise rohrförmig oder auch im wesentlichen kastenförmig auch ausgeführt sein. Wie in Fig. 2 dargestellt oder u.a. auch in der US-B 73 60 451 vorgeschlagen, kann der Gegenschwinger 20 beispielsweise mittels links- und rechtsseitig des Meßrohrs 10 angeordneten Platten oder auch links- und rechtsseitig des Meßrohrs 10 angeordneten Blindrohren gebildet sein. Alternativ dazu kann der Gegenschwinger 20 - wie etwa in der US-B 66 66 098 vorgeschlagen - auch mittels eines einzigen seitlich des Meßrohrs und parallel dazu verlaufenden Blindrohrs gebildet sein. Wie aus einer Zusammenschau der Fign. 2 und 3 ersichtlich, ist der Gegenschwinger 20 im hier gezeigten Ausführungsbeispiel mittels wenigstens eines einlaßseitigen ersten Kopplers 31 am ersten Meßrohrende 11# und mittels wenigstens eines auslaßseitigen, insb. zum Koppler 31 im wesentlichen identischen, zweiten Kopplers 32 am zweiten Meßrohrende 12# gehaltert. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind. Ferner kann - wie bei dem in den Fig. 2 und 3 gezeigten Ausführungsbeispiel vorgeschlagen - ein mittels in Richtung der gedachten Längsachse L des Meßwandlers voneinander beabstandeten Knotenplatten zusammen mit überstehenden Enden des Gegenschwinger 20 einlaßseitig und auslaßseitig jeweils gebildeter, vollständig geschlossener Kasten oder ggf. auch teilweise offener Rahmen als Koppler 31 bzw. als Koppler 32 dienen. Wie in den Fig. 2 und 3 schematisch dargestellt, ist das Meßrohr 10 ferner über ein einlaßseitig im Bereich der ersten Kopplungszone einmündendes gerades erstes Verbindungsrohrstück 11 und über ein auslaßseitig im Bereich der zweiten Kopplungszone einmündendes, insb. zum ersten Verbindungsrohrstück 11 im wesentlichen identisches, gerades zweites Verbindungsrohrstück 12 entsprechend an die das Medium zu- bzw. abführende - hier nicht dargestellte - Prozeßleitung angeschlossen, wobei ein Einlaßende des einlaßseitigen Verbindungsrohrstück 11 praktisch das Einlaßende des Meßwandlers und ein Auslaßende des auslaßseitigen Verbindungsrohrstück 12 das Auslaßende des Meßwandlers bilden. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug aus einem für solche Meßwandler üblichen Material, wie z.B. Edelstahl, Titan, Zirkonium, Tantal oder entsprechenden Legierungen davon, dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Im in den Fig. 2 und 3 gezeigten Ausführungsbeispiel ist ferner vorgesehen, daß die beiden Verbindungsrohrstücke 11, 12, so zueinander sowie zu einer die beiden Kopplungszonen 11#, 12# imaginär verbindenden gedachten Längsachse L des Meßwandlers ausgerichtet sind, daß das hier mittels Gegenschwinger und Meßrohr gebildete Innenteil, einhergehend mit Verdrillungen der beiden Verbindungsrohrstücke 11, 12, um die Längsachse L pendeln kann. Dafür sind die beiden Verbindungsrohrstücke 11, 12 so zueinander auszurichten, daß die im wesentlichen geraden Rohrsegmente im wesentlichen parallel zur gedachten Längsachse L bzw. zur gedachten Schwingungsachse der Biegeschwingungen des Meßrohrs verlaufen daß die Rohrsegmente sowohl zur Längsachse L als auch zueinander im wesentlichen fluchten. Da die beiden Verbindungsrohrstücke 11, 12 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet. Wie aus den Fig. 2 und 3 weiterhin ersichtlich, ist das, insb. im Vergleich zum Meßrohr 10 biege- und torsionssteifes, Meßwandlergehäuse 100, insb. starr, an einem bezüglich der ersten Kopplungszone distalen Einlaßende des einlaßseitigen Verbindungsrohrstücks 11 sowie an einem bezüglich der ersten Kopplungszone distalen Auslaßende des auslaßseitigen Verbindungsrohrstück 12 fixiert. Insoweit ist also das gesamte - hier mittels Meßrohr 10 und Gegenschwinger 20 gebildete - Innenteil nicht nur vom Meßwandlergehäuse 100 vollständig umhüllt, sondern infolge seiner Eigenmasse und der Federwirkung beider Verbindungsrohrstücke 11, 12 im Meßwandler-Gehäuse 100 auch schwingfähig gehaltert.

Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch endseitig in das Meßwandlergehäuse 100 integriert sein. Falls erforderlich können die Verbindungsrohrstücke 11, 12 im übrigen aber auch direkt mit der Prozeßleitung, z.B. mittels Schweißen oder Hartlötung, verbunden werden. Im in Fig. 2 und 3 gezeigten Ausführungsbeispiel sind der erste Anschlußflansch 13 dem einlaßseitigen Verbindungsrohrstück 11 an dessen Einlaßende und der zweite Anschlußflansch 14 dem auslaßseitigen Verbindungsrohrstück 12 an dessen Auslaßende angeformt, während im in Fig. 4 und 5 gezeigten Ausführungsbeispiel die Anschlußflansche entsprechend mit den zugehörigen Strömungsteilern entsprechend verbunden sind.

Zum aktiven Anregen mechanischer Schwingungen des wenigstens einen Meßrohrs (bzw. der Meßrohre), insb. auf einer oder mehreren von dessen natürlichen Eigenfrequenzen, umfaßt jeder der in den Fig. 4 bis 7 gezeigten Meßwandler ferner eine elektromechanische, insb. elektrodynamische, also mittels Tauchankerspulen gebildete, Erregeranordnung 40. Diese dient - angesteuert von einem von der Treiber-Schaltung der Umformer-Elektronik gelieferten und, gegebenenfalls im Zusammenspiel mit der Meß- und Auswerte-Schaltung, entsprechend konditionierten Erregersignal, z.B. mit einem geregelten Strom und/oder einer geregelten Spannung -jeweils dazu, mittels der Treiber-Schaltung eingespeiste elektrische Erregerenergie bzw. - leistung $E_{exc}$ in eine auf das wenigstens eine Meßrohr 10, z.B. pulsförmig oder harmonisch, einwirkende und dieses in der vorbeschriebenen Weise auslenkende Erregerkraft $F_{exc}$ umzuwandeln. Die Erregerkraft $F_{exc}$ kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann z.B. eine in konventioneller Weise mittels eines - beispielsweise einzigen - mittig, also im Bereich einer halben Schwinglänge, am jeweiligen Meßrohr angreifenden, elektrodynamischen Schwingungserregers 41 gebildete Erregeranordnung 40 dienen. Der Schwingungserreger 41 kann im Falle eines mittels Gegenschwinger und Meßrohr gebildeten Innenteils, wie in der Fig. 4 angedeutet, beispielsweise mittels einer am Gegenschwinger 20 befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am Meßrohr 10 fixiert ist, gebildet sein. Weitere - durchaus auch für das erfindungsgemäße Meßsystem geeignete - Erregeranordnungen für Schwingungen des wenigstens einen Meßrohrs sind z.B. in den eingangs erwähnten US-A 57 05 754, US-A 55 31 126, US-B 62 23 605, US-B 66 66 098 oder US-B 73 60 451 gezeigt.

Nach einer weiteren Ausgestaltung der Erfindung ist das wenigstens eine Meßrohr 10 im Betrieb mittels der Erregeranordnung zumindest zeitweise in einem Nutzmode aktiv angeregt, in dem es, insb. überwiegend oder ausschließlich, Biegeschwingungen um die erwähnte gedachte Schwingungsachse ausführt, beispielsweise überwiegend mit genau einer natürlichen Eigenfrequenz (Resonanzfrequenz) des jeweiligen bzw. des damit jeweils gebildeten Innenteils des Meßwandlers, wie etwa jener, die einem Biegeschwingungsgrundmode entspricht, in dem das wenigstens eine Meßrohr genau einen Schwingungsbauch aufweist. Im besonderen ist hierbei ferner vorgesehen, daß das wenigstens eine Meßrohr 10, wie bei derartigen Meßwandlern mit gekrümmtem Meßrohr durchaus üblich, mittels der Erregeranordnung zu Biegeschwingungen bei einer Erregerfrequenz $f_{exc}$, so angeregt ist, daß es sich im Nutzmode, um die erwähnte gedachte Schwingungsachse - etwa nach Art eines einseitig eingespannten Auslegers - oszillierend, zumindest anteilig gemäß einer seiner natürlichen Biegeschwingungsformen ausbiegt. Die Biegeschwingungen des Meßrohrs weisen dabei im Bereich der das einlaßseitige Meßrohrende 11# definierenden einlaßseitigen Kopplungszone einen einlaßseitigen Schwingungsknoten und im Bereich der das auslaßseitige Meßrohrende 12# definierenden auslaßseitigen Kopplungszone einen auslaßseitigen Schwingungsknoten auf, so daß also das Meßrohr sich mit seiner Schwinglänge zwischen diesen beiden Schwingungsknoten im wesentlichen frei schwingend erstreckt. Falls erforderlich, kann das vibrierenden Meßrohr aber auch, wie beispielsweise in der US-B 70 77 014 oder der der JP-A 9-015015 vorgeschlagen, mittels entsprechend im Bereich der Schwinglänge am Meßrohr zusätzlich angreifender federelastischer und/oder elektromotorischer Koppelelemente in seinen Schwingungsbewegungen gezielt beeinflußt werden. Die Treiberschaltung kann z.B. als Phasen-Regelschleife (PLL) ausgebildet sein, die in der dem Fachmann bekannten Weise dazu verwendet wird, eine Erregerfrequenz, $f_{exc}$, des Erregersignals ständig auf die momentane Eigenfrequenz des gewünschten Nutzmodes abzugleichen. Der Aufbau und die Verwendung solcher Phasenregel-Schleifen zum aktiven Anregen von Meßrohren zu Schwingungen auf einer mechanischen Eigenfrequenzen ist z.B. in der US-A 48 01 897 ausführlich beschrieben. Selbstverständlich können auch andere für das Einstellen der Erregerenergie $E_{exc}$ geeignete, dem Fachmann an und für sich bekannte Treiberschaltungen verwendet werden, beispielsweise auch gemäß der dem eingangs erwähnten Stand der Technik, etwa der eingangs erwähnten US-A 47 77 833, US-A 48 01 897, US-A 48 79 911, US-A 50 09 109, US-A 50 24 104, US-A 50 50 439, US-A 58 04 741, US-A 58 69 770, US-A 6073495 oder US-A 63 111 36. Ferner sei hinsichtlich einer Verwendung solcher Treiberschaltungen für Meßwandler vom Vibrationstyp auf die mit Meßumformern der Serie *"PROMASS 83"* bereitgestellte Umformer-Elektroniken verwiesen, wie sie von der Anmelderin beispielsweise in Verbindung mit Meßwandlern der Serie *"PROMASS E", "PROMASS F", "PROMASS H", "PROMASS I", "PROMASS P" oder "PROMASS S"* angeboten werden. Deren Treiberschaltung ist beispielsweise jeweils so ausgeführt, daß die lateralen Biegeschwingungen im Nutzmode auf eine konstante, also auch von der Dichte, $\rho$, weitgehend

unabhängige Amplitude geregelt werden.

Zum Vibrierenlassen des wenigsten einen Meßrohrs 10 wird die Erregeranordnung 40, wie bereits erwähnt, mittels eines gleichfalls oszillierenden Erregersignals von einstellbarer Erregerfrequenz, $f_{exc}$, gespeist, so daß die Erregerspule des - hier einzigen am Meßrohr 10 angreifenden Schwingungserregers - im Betrieb von einem in seiner Amplitude entsprechend geregelten Erregerstrom $i_{exc}$ durchflossen ist, wodurch das zum Bewegen des Meßrohrs erforderliche Magnetfeld erzeugt wird. Das Treiber- oder auch Erregersignal bzw. dessen Erregerstrom $i_{exc}$ kann z.B. harmonisch, mehrfrequent oder auch rechteckförmig sein. Die Erregerfrequenz, $f_{exc}$, des zum Aufrechterhalten der Biegeschwingungen des wenigsten einen Meßrohrs 10 erforderlichen Erregerstrom kann beim im Ausführungsbeispiel gezeigten Meßwandler in vorteilhafter Weise so gewählt und eingestellt sein, daß das lateral schwingende Meßrohr 10 zumindest überwiegend in einem Biegeschwingungsgrundmode mit einem einzigen Schwingungsbauch oszilliert. Demnach ist nach einer weiteren Ausgestaltung der Erfindung die Erreger- oder auch Nutzmodefrequenz, $f_{exc}$, so eingestellt, daß sie möglichst genau einer Eigenfrequenz von Biegeschwingungen des Meßrohrs 10, insb. der des Biegeschwingungsgrundmodes, entspricht. Bei einer Verwendung eines aus Edelstahl, insb. Hastelloy, gefertigten Meßrohrs mit einem Kaliber von 29 mm, einer Wandstärke s von etwa 1,5 mm, einer Schwinglänge von etwa 420 mm und einer gesehnten Länge, gemessen zwischen den beiden Meßrohrenden, von 305 mm, würde die dem Biegeschwingungsgrundmode entsprechende Resonanzfrequenz desselben beispielsweise bei einer Dichte von praktisch Null, z.B. bei lediglich mit Luft gefülltem Meßrohr, in etwa 490 Hz betragen.

Im in den Fig. 4 und 5 gezeigten Ausführungsbeispiel mit mittels Meßrohr und Gegenschwinger gebildeten Innenteils führt das Meßrohr 10 die mittels der Erregeranordnung aktiv angeregten Biegeschwingungen überwiegend relativ zum Gegenschwinger 20 aus, insb. auf einer gemeinsamen Schwingfrequenz zueinander gegenphasig. Im Falle einer gleichzeitig, beispielsweise differentiell, sowohl auf Meßrohr als auch Gegenschwinger wirkenden Erregeranordnung wird dabei zwangsweise auch der Gegenschwinger 20 zu simultanen Auslegerschwingungen angeregt, und zwar so, daß er frequenzgleich, jedoch zumindest anteilig außerphasig, insb. im wesentlichen gegenphasig, zum im Nutzmode schwingenden Meßrohr 10 oszilliert. Im besonderen sind Meßrohr 10 und Gegenschwinger 20 dabei ferner so aufeinander abgestimmt bzw. so angeregt, daß sie im Betrieb zumindest zeitweise und zumindest anteilig gegengleiche, also gleichfrequente, jedoch im wesentlichen gegenphasige, Biegeschwingungen um die Längsachse L ausführen. Die Biegeschwingungen können dabei so ausgebildete sein, daß sie von gleicher modaler Ordnung und somit zumindest bei ruhendem Fluid im wesentlichen gleichförmig sind; im anderen Fall der Verwendung zweier Meßrohre sind diese, wie bei Meßwandlern der in Rede stehenden Art üblich, mittels der, insb. differentiell zwischen beiden Meßrohre 10, 10' wirkenden, Erregeranordnung aktiv so angeregt, daß sie im Betrieb zumindest zeitweise gegengleiche Biegeschwingungen um die Längsachse L ausführen. Anders gesagt, die beiden Meßrohre 10, 10' bzw. Meßrohr 10 und Gegenschwinger 20 bewegen sich dann jeweils nach der Art von gegeneinander schwingenden Stimmgabelzinken. Für diesen Fall ist gemäß einer weiteren Ausgestaltung der Erfindung der wenigstens einen elektro-mechanischen Schwingungserreger dafür ausgelegt, gegengleiche Vibrationen des ersten Meßrohrs und des zweiten Meßrohrs, insb. Biegeschwingungen jedes der Meßrohre um eine das jeweilige erste Meßrohrende und das jeweilige zweite Meßrohrende imaginär verbindende gedachte Schwingungsachse, anzuregen bzw. aufrechtzuerhalten.

Für den betriebsmäßig vorgesehenen Fall, daß das Medium in der Prozeßleitung strömt und somit der Massedurchfluß *m* von Null verschieden ist, werden mittels des in oben beschriebener Weise vibrierenden Meßrohrs 10 im hindurchströmenden Medium auch Corioliskräfte induziert. Diese wiederum wirken auf das Meßrohr 10 zurück und bewirken so eine zusätzliche, sensorisch erfaßbare Verformung desselben, und zwar im wesentlichen gemäß einer weiteren natürlichen Eigenschwingungsform von höherer modaler Ordnung als der Nutzmode. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als Coriolismode kann, wie bei derartigen Meßwandlern mit gekrümmtem Meßrohr üblich, z.B. die Eigenschwingungsform des anti-symmetrischen Twistmodes dienen, also jene, bei der das Meßrohr 10, wie bereits erwähnt, auch Drehschwingungen um eine senkrecht zur Biegschwingungsachse ausgerichteten gedachten Drehschwingungsachse ausführt, die die Mittelinie des Meßrohrs 10 im Bereich der halben Schwingungslänge imaginär schneidet.

Zum Erfassen von Schwingungen, insb. Biegeschwingungen, des wenigsten einen Meßrohrs 10, insb. auch denen im Coriolismode, weist der Meßwandler ferner jeweils eine entsprechende Sensoranordnung 50 auf. Diese umfaßt, wie auch in den Fig. 4 bis 7 schematische dargestellt, einen vom wenigsten einen Schwingungserreger beabstandet am wenigsten einen Meßrohr 10 angeordneten, beispielsweise elektrodynamischen, ersten Schwingungssensor 51, der ein Vibrationen des Meßrohrs 10 repräsentierendes erstes Primärsignal $s_1$ des Meßwandlers liefert, beispielsweise einer mit den Schwingungen korrespondierende Spannung oder einem mit den Schwingungen korrespondierenden Strom, sowie einen vom ersten Schwingungssensor 52 beabstandet am wenigsten einen Meßrohr 10 angeordneten, insb. elektrodynamischen, zweiten Schwingungssensor 52, der ein Vibrationen des Meßrohrs 10 repräsentierendes zweites Primärsignal $s_2$ des Meßwandlers liefert. Eine Länge des sich zwischen den beiden, beispielsweise baugleichen, Schwingungssensoren erstreckenden, insb. im wesentlichen freischwingend vibrierenden, Bereichs des zugehörigen wenigsten einen Meßrohrs entspricht hierbei einer Meßlänge des jeweiligen Meßwandlers. Jedes der - typischerweise

breitbandigen - Primärsignale $s_1$, $s_2$ des Meßwandlers MW weist dabei jeweils eine mit dem Nutzmode korrespondierende Signalkomponente mit einer der momentanen Schwingfrequenz, $f_{exc}$, des im aktiv angeregten Nutzmode schwingenden wenigstens einen Meßrohrs 10 entsprechenden Signalfrequenz und einer vom aktuellen Massendurchfluß des im wenigstens einen Meßrohr 10 strömenden Medium abhängigen Phasenverschiebung relativ zu dem, beispielsweise mittels PLL-Schaltung in Abhängigkeit von einer zwischen wenigstens einem der Schwingungsmeßsignale $s_1$, $s_2$ und dem Erregerstrom in der Erregeranordnung existierenden Phasendifferenz generierten, Erregersignal $i_{exc}$ auf. Selbst im Falle der Verwendung eines eher breitbandigen Erregersignals $i_{exc}$ kann infolge der zumeist sehr hohen Schwingungsgüte des Meßwandlers MW davon ausgegangen werden, daß die mit dem Nutzmode korrespondierende Signalkomponente jedes der Primärsignale andere, insb. mit allfälligen externen Störungen korrespondierende und/oder als Rauschen einzustufende, Signalkomponenten überwiegt und insoweit auch zumindest innerhalb eines einer Bandbreite des Nutzmodes entsprechenden Frequenzbereichs dominierend ist.

In den hier gezeigten Ausführungsbeispielen sind jeweils der erste Schwingungssensor 51 einlaßseitig und der zweite Schwingungssensor 52 auslaßseitig am wenigstens einen Meßrohr 10 angeordnet, insb. vom wenigstens einen Schwingungserreger bzw. von der Mitte des Meßrohrs 10 gleichweit beabstandet wie der erste Schwingungssensor. Wie bei derartigen, in als Coriolis-Massendurchfluß-Meßgerät ausgebildeten Meßsystemen verwendeten, Meßwandlern vom Vibrationstyp durchaus üblich, sind der erste Schwingungssensor 51 und der zweite Schwingungssensor 52 gemäß einer Ausgestaltung der Erfindung ferner jeweils auf einer vom Schwingungserreger 41 eingenommenen Seite des Meßrohrs im Meßwandler angeordnet. Desweiteren kann auch der zweite Schwingungssensor 52 auf der vom ersten Schwingungssensor 51 eingenommenen Seite des Meßrohrs im Meßwandler angeordnet sein. Die Schwingungssensoren der Sensoranordnung können in vorteilhafter Weise zudem so ausgebildet sein, daß sie Primärsignale gleichen Typs liefern, beispielsweise jeweils eine Signalspannung bzw. einen Signalstrom. Gemäß einer weiteren Ausgestaltung der Erfindung sind sowohl der erste Schwingungssensor als auch der zweite Schwingungssensor ferner jeweils so im Meßwandler MW plaziert, daß jeder der Schwingungssensoren zumindest überwiegend Vibrationen des wenigstens einen Meßrohrs 10 erfaßt. Für den oben beschriebenen Fall, daß das Innenteil mittels eines Meßrohrs und eines mit diesem gekoppelten Gegenschwingers gebildet ist, sind nach einer weiteren Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des Meßrohrs relativ zum Gegenschwinger, beispielsweise differentiell, erfassen, daß also sowohl das erste Primärsignal $s_1$ als auch das zweite Primärsignal $s_2$, insb. gegengleiche, Schwingungsbewegungen des wenigstens einen Meßrohrs 10 relativ zum Gegenschwinger 20 repräsentieren. Für den anderen beschriebenen Fall, daß das Innenteil mittels zweier, insb. im Betrieb gegengleich schwingender, Meßrohre gebildet ist, sind nach einer anderen Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des ersten Meßrohrs 10 relativ zum zweiten Meßrohr 10', beispielsweise differentiell, erfassen, daß also sowohl das erste Primärsignal $s_1$ als auch das zweite Primärsignal $s_2$, insb. gegengleiche, Schwingungsbewegungen der zwei Meßrohre relativ zueinander repräsentieren, insb. derart daß - wie bei konventionellen Meßwandlern üblich - das mittels des ersten Schwingungssensors erzeugte erste Primärsignal einlaßseitige Vibrationen des ersten Meßrohrs relativ zum zweiten Meßrohr und das mittels des zweiten Schwingungssensors erzeugte zweite Primärsignal auslaßseitige Vibrationen des ersten Meßrohrs relativ zum zweiten Meßrohr repräsentieren. Gemäß einer weiteren Ausgestaltung der Erfindung ist ferner vorgesehen, daß die Sensoranordnung genau zwei Schwingungssensoren, also zusätzlich zum ersten und zweiten Schwingungssensor keine weiteren Schwingungssensoren, aufweist und insoweit hinsichtlich der verwendeten Komponenten einer konventionellen Sensoranordnung entspricht.

Die von der Sensoranordnung gelieferten, als Primärsignale des Meßwandlers dienenden Schwingungsmeßsignale $s_1$, $s_2$, die jeweils eine Signalkomponente mit einer momentanen Schwingfrequenz, $f_{exc}$, des im aktiv angeregten Nutzmode schwingenden wenigstens einen Meßrohrs 10 entsprechende Signalfrequenz aufweisen, sind, wie auch in Fig. 3 gezeigt, der Umformer-Elektronik ME und daselbst dann der darin vorgesehenen Meß- und Auswerteschaltung μC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Als Eingangsschaltung FE wie auch als Meß- und Auswerteschaltung μC können hierbei in herkömmlichen Coriolis-Massedurchfluß-Meßgeräten zwecks Konvertierung der Primärsignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung μC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Primärsignale $s_1$, $s_2$ wie bereits angedeutet, für eine Verarbeitung im Mikrocomputer mittels entsprechender Analogzu-digital-Wandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie *"PROMASS 83"*.

Beim erfindungsgemäßen Meßsystem dient die Umformer-Elektronik ME im besonderen dazu, mittels des ersten Primärsignals und mittels des zweiten Primärsignals sowie unter Berücksichtigung einer für das strömende Medium ermittelten Reynoldszahl eine zwischen zwei vorgegebenen, beispielsweise auch innerhalb des Meßwandlers lokalisierten, Referenzpunkten im strömenden Medium auftretende Druckdifferenz zu messen, wie z.B. einen seitens des Meßwandlers selbst im strömenden Medium provozierten Druckabfall. Dafür generiert die Umformer-Elektronik mittels des ersten und zweiten Primärsignals sowie unter Verwendung eines intern, etwa im flüchtigen Datenspeicher RAM, vorgehaltenen Reynoldszahl-Meßwerts $X_{Re}$, der eine Reynoldszahl, Re, für im Meßwandler strömendes Medium repräsentiert, im Betrieb wiederkehrend einen Druckdifferenz-Meßwert $X_{\Delta p}$, der vorgenannte Druckdifferenz entsprechend repräsentiert, beispielsweise derart, daß ein erster der beiden Referenzpunkte einlaßseitig und ein zweiter der beiden Referenzpunkte auslaßseitig im Meßwandler lokalisiert sind und insoweit eine über dem Meßwandler insgesamt abfallende Druckdifferenz, $\Delta p_{tota}$, ermittelt wird. Der Reynoldszahl-Meßwert $X_{Re}$ kann beispielsweise im Betrieb mittels des Treibersignals und/oder mittels wenigstens eines der Primärsignale generiert werden, beispielsweise nach einem der in der eingangs erwähnten US-B 65 13 393 beschriebenen Verfahren direkt in der Umformer-Elektronik ME. Alternativ oder in Ergänzung dazu kann der Reynoldszahl-Meßwert $X_{Re}$ aber beispielsweise auch vom erwähnten elektronischen Datenverarbeitungssystem an die Umformer-Elektronik ME übermittelt werden.

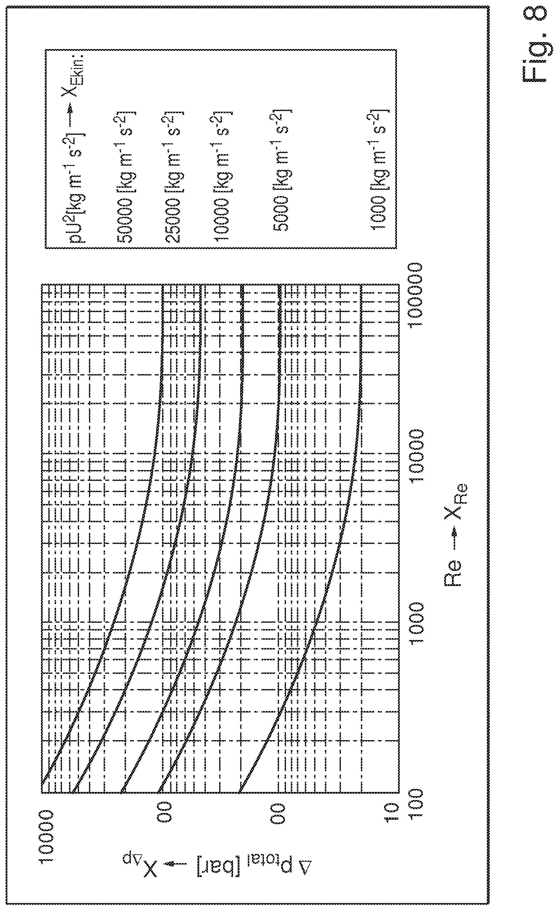

Gemäß einer weiteren Ausgestaltung der Erfindung ermittelt die Umformer-Elektronik den Druckdifferenz-Meßwert unter Verwendung des Reynoldszahl-Meßwerts $X_{Re}$ sowie eines gleichfalls Meßsystem intern, beispielsweise wiederum im flüchtigen Datenspeicher RAM, vorgehaltenen Strömungsenergie-Meßwerts $X_{Ekin}$, der eine von einer Dichte, $\rho$, und einer Strömungsgeschwindigkeit, $U$, des im Meßwandler strömenden Mediums abhängige kinetische Energie, $\rho U^2$, von im Meßwandler strömendem Medium repräsentiert. Dafür ist in der Umformer-Elektronik ferner ein entsprechender Rechenalgorithmus implementiert, der den Druckdifferenz-Meßwert basierend auf der, in Fig. 8 exemplarisch dargestellten, Beziehung

$$X_{\Delta p} = \left( K_{\varsigma,1} + K_{\varsigma,2} \cdot X_{Re}^{K_{\varsigma,3}} \right) \cdot X_{Ekin} \text{ generiert, worin } K_{\zeta,1}, K_{\zeta,2}, K_{\zeta,3}, \text{ vorab experimentell, etwa im}$$

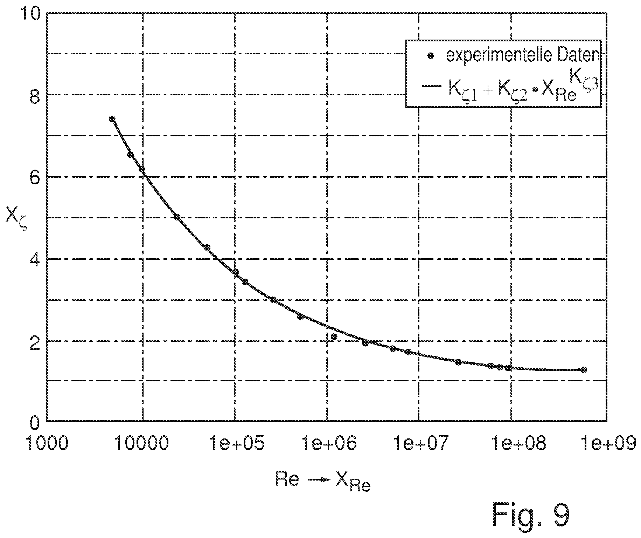

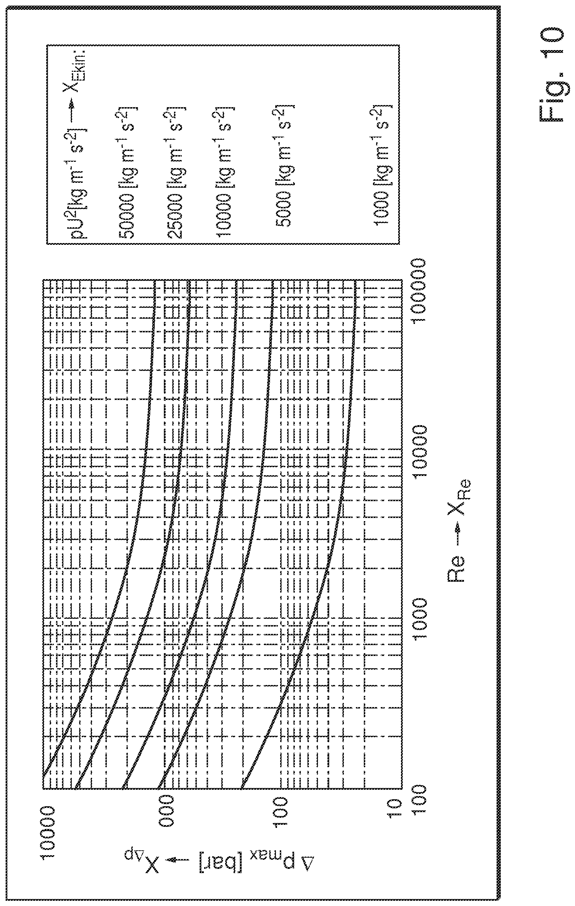

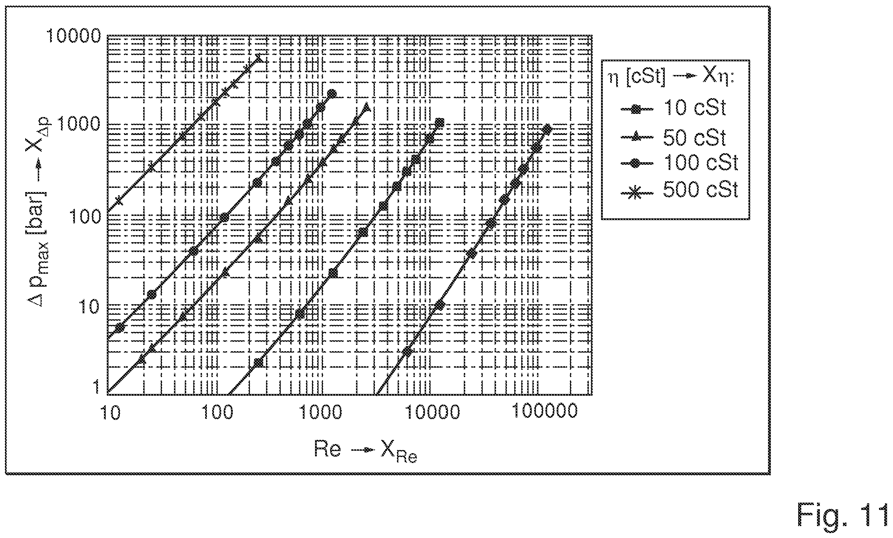

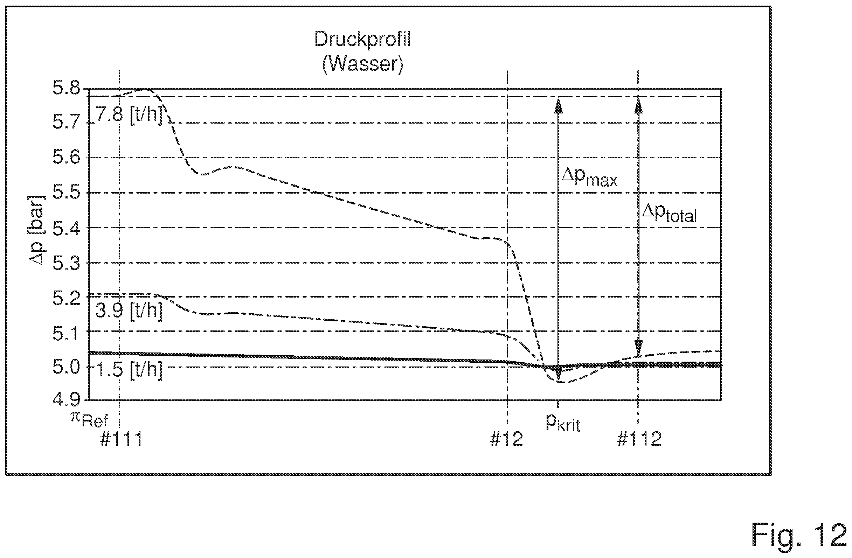

generiert, worin $K_{\zeta,1}$, $K_{\zeta,2}$, $K_{\zeta,3}$, vorab experimentell, etwa im Zuge einer Kalibrierung des Meßsystems und/oder mittels computergestützter Berechnungen, z.B. mittels FEM bzw. CFD, ermittelte, insb. in der Umformer-Elektronik als Festwerte vorgehaltene, Meßsystemparameter sind, die letztlich auch den jeweiligen Ort der der zu ermittelnden Druckdifferenz zugrundeliegenden Referenzpunkte definieren. Die mittels dieser Meßsystemparameter gebildete Funktion, von der ein durch experimentelle Untersuchungen ermitteltes Beispiel in Fig. 9 gezeigt ist, stellt quasi eine zwischen der momentanen bzw. aktuell gültigen Reynoldszahl Re des strömenden Mediums und einem davon abhängigen, auf die momentane kinetische Energie, $\rho U^2$, des im Meßwandler strömenden Mediums bezogenen spezifischen Druckabfall vermittelnde Druckabfall-Kennlinie des Meßsystems dar, deren daraus intern der Umformer-Elektronik generierte, im weiteren als Druckabfall-Koeffizienten $X_\zeta$,

bezeichneten Funktionswerte $X_\zeta = K_{\zeta,1} + K_{\zeta,2} \cdot X_{Re}$ lediglich von der momentanen Reynoldszahl abhängig sind. Die die Druckabfall-Kennlinie definierenden Meßsystemparameter $K_{\zeta,1}$, $K_{\zeta,2}$, $K_{\zeta,3}$ können beispielsweise so gewählt sein, daß ein erster der Referenzpunkte im - hier durch das erste Gehäuseende des Meßwandler-Gehäuses gebildeten - Einlaßende #111 des Meßwandlers lokalisiert ist, und daß ein zweiter der Referenzpunkte im - hier durch das zweite Gehäuseende des Meßwandler-Gehäuses gebildeten - Auslaßende #112 des Meßwandlers lokalisiert ist, so daß also der Druckdifferenz-Meßwert $X_{\Delta p}$ im Ergebnis eine vom Einlaßende bis hin zum Auslaßende im strömenden Medium insgesamt auftretende Druckdifferenz, $\Delta p_{total}$, repräsentiert, vgl. Fign. 9 und 11. Die Meßsystemparameter und insoweit die Referenzpunkte können beispielsweise aber auch so gewählt sein, daß der Druckdifferenz-Meßwert $X_{\Delta p}$, wie in Fig. 10 dargestellt, einen maximalen Druckabfall, $\Delta p_{max}$, im innerhalb des Meßwandlers strömenden Medium repräsentiert. Dieser maximale Druckabfall, $\Delta p_{max}$, tritt, wie auch aus den in Fig. 12 exemplarisch für Meßwandler der in Rede stehenden Art dargestellten Druckverlustprofilen ersichtlich, zwischen dem durch das erste Gehäuseende gebildeten Einlaßende #111 des Meßwandlers und einem stromaufwärts des durch das zweiten Gehäuseende gebildeten Auslaßende #112 des Meßwandlers lokalisierten Bereich von erhöhter Turbulenz auf. Unter Berücksichtigung der Druckabfall-Kennlinie bzw. des Druckabfall-Koeffizienten $X_\zeta$ läßt sich der zur Ermittlung des den Druckdifferenz-Meßwerts vorgeschlagene funktionale Zusammenhang desweiteren zu der Beziehung $X_{\Delta p} = X_\zeta \cdot X_{Ekin}$ vereinfachen.

Die Meß- und Auswerteschaltung $\mu$C dient gemäß einer weiteren Ausgestaltung der Erfindung im ferner dazu, zwecks Ermittlung des Druckdifferenz-Meßwerts $X_{\Delta p}$, insb. auch zur Ermittlung des dafür benötigten Strömungsenergie-Meßwerts $X_{Ekin}$, und/oder des dafür benötigten Reynoldszahl-Meßwerts $X_{Re}$, unter Verwendung der von der Sensoranordnung 50 gelieferten Primärsignale $s_1$, $s_2$, beispielsweise anhand einer zwischen den bei anteilig in Nutz- und Coriolismode schwingendem Meßrohr 10 generierten Primärsignalen $s_1$, $s_2$ des ersten und zweiten Schwingungssensors 51, 52 detektierten Phasendifferenz, wiederkehrend einen Massendurchfluß-Meßwert $X_m$ zu ermitteln, der die zu messenden Massendurchflußrate, $\overset{\bullet}{m}$, des durch den Meßwandler geführten Mediums möglichst genau repräsentiert. Dafür erzeugt die Meß- und Auswerte-Schaltung gemäß einer weiteren Ausgestaltung der Erfindung im Betrieb wiederkehrend einen Phasendifferenz-Meßwert $X_{\Delta\varphi}$, der die zwischen dem ersten Primärsignal $s_1$ und dem zweiten Primärsignal $s_2$ existierenden Phasendifferenz, $\Delta\varphi$, momentan repräsentiert. Die Berechnung des Massendurchfluß-Meßwert $X_m$ kann, unter Verwendung eines gleichfalls in der Umformer-Elektronik vorgehaltenen, eine Schwingungsfrequenz von Vibrationen, beispielsweise den oben erwähnten lateralen Biegeschwingungen des wenigstens einen Meßrohrs 10 im Nutzmode, repräsentierenden Frequenz-Meßwerts $X_f$ somit beispielsweise basierend auf dem bekannten Zusammenhang:

$$X_m = K_m \cdot \frac{X_{\Delta\varphi}}{X_f}$$

erfolgen, worin $K_m$ ein vorab experimentell, z.B. im Zuge einer Kalibrierung des Meßsystems und/oder mittels computergestützter Berechnungen, ermittelter, z.B. im nichtflüchtigen Datenspeicher, als Festwerte intern vorgehaltener Meßsystemparameter ist, der zwischen dem hier mittels des Phasendifferenz-Meßwerts $X_{\Delta\varphi}$ und des Frequenz-Meßwerts $X_f$ gebildeten Quotienten und der zu messenden Massendurchflußrate, $\overset{\bullet}{m}$, entsprechend vermittelt. Der Frequenz-Meßwert $X_f$ selbst kann auf einfache Weise z.B. anhand von den von der Sensoranordnung gelieferten Primärsignale oder auh anhand des wenigstens einen die Erregeranordnung speisenden Treibersignals in dem Fachmann bekannter Weise ermittelt werden.

Gemäß einer weiteren Ausgestaltung ist ferner vorgesehen, daß die Umformer-Elektronik, beispielsweise im flüchtigen Datenspeicher RAM, einen Dichte-Meßwert $X_\rho$, der eine zu messende Dichte, $\rho$, des Mediums momentan repräsentiert, und/oder einen Viskositäts-Meßwert $X_\eta$, der eine Viskosität des Mediums momentan repräsentiert, vorhält. Basierend auf dem Massendurchfluß-Meßwert $X_m$ und dem Dichte-Meßwert $X_\rho$ kann somit nämlich mittels der Umformer-Elektronik der zur Ermittlung des Druckdifferenz-Meßwerts $X_{\Delta p}$ benötigte Strömungsenergie-Meßwert $X_{Ekin}$ intern ermittelt werden, etwa mittels Umsetzung der Beziehung $X_{Ekin} = K_{Ekin} \cdot \frac{(X_m)^2}{X_\rho}$, während unter Verwendung des Massendurchfluß-Meßwerts $X_m$ und des Viskositäts-Meßwert $X_\eta$, auf einfache Weise der zur Ermittlung des Druckdifferenz-Meßwerts $X_{\Delta p}$ benötigte Reynoldszahl-Meßwert $X_{Re}$ in der Umformer-Eletronik ermittelt werden kann, etwa basierend auf der Beziehung $X_{Re} = K_{Re} \cdot \frac{X_m}{X_\eta}$. Die entsprechenden Meßsystemparameter $K_{Ekin}$ bzw. $K_{Re}$ sind im wesentlichen vom effektiven Strömungsquerschnitt des Meßwandlers abhängig und können vorab ohne weiteres, z.B. wiederum im Zuge einer Kalibrierung des Meßsystems und/oder mittels computergestützter Berechnungen, experimentell ermittelt und in der Umformer-Elektronik als meßsystemspezifische Festwerte abgelegt werden.

Unter Berücksichtigung der vorgenannten funktionalen Zusammenhänge kann der Druckdifferenz-Meßwert $X_{\Delta p}$ auch basierend auf einer der folgenden Beziehungen ermittelt werden: $X_{\Delta p} = X_\zeta \cdot K_{Ekin} \cdot \frac{(X_m)^2}{X_\rho}$,

$$X_{\Delta p} = \left( K_{\varsigma,1} + K_{\varsigma,2} \cdot X_{Re}^{K_{\varsigma,3}} \right) \cdot K_{Ekin} \cdot \frac{(X_m)^2}{X_\rho},$$

$$X_{\Delta p} = \left[ K_{\varsigma,1} + K_{\varsigma,2} \cdot \left( K_{Re} \cdot \frac{X_m}{X_\eta} \right)^{K_{\varsigma,3}} \right] \cdot X_{Ekin} ,$$

oder

$$X_{\Delta p} = \left[ K_{\varsigma,1} + K_{\varsigma,2} \cdot \left( K_{Re} \cdot \frac{X_m}{X_\eta} \right)^{K_{\varsigma,3}} \right] \cdot K_{Ekin} \cdot \frac{(X_m)^2}{X_\rho} .$$

Die vorgenannten, für die für die Ermittlung des Druckdifferenz-Meßwerts benötigten Meßsystemparameter $K_{\zeta,1}$, $K_{\zeta,2}$, $K_{\zeta,3}$ bzw. $K_{Ekin}$ oder $K_{Re}$ jeweils erforderlichen definierten Strömungen mit bekannter Reynoldszahlen, *Re,* bekannter kinetischer Energie, $\rho U^2$, und bekannter Druckverlaufs können ausreichend präzise auf entsprechenden Kalibrieranlagen ohne weiteres realisiert werden, beispielsweise mittels hinsichtlich der Strömungseigenschaften bekannter Kalibriermedien, wie z.B. Wasser, Glycerin etc., die mittels entsprechend gesteuerten Pumpen dem jeweils zu kalibrierenden Meßsystem als eingeprägte Strömung zu geführt werden. Alternativ oder in Ergänzung dazu können die für die Ermittlung der Meßsystemparameter benötigten Strömungsparameter, wie die Reynoldszahl, die kinetische Energie, die Druckdifferenz etc., beispielsweise auch mittels eines Druckdifferenz-Meßsystem meßtechnisch ermittelt werden, das zusammen mit dem zu kalibrierenden Meßsystem eines der in der eingangs erwähnten US-B 74 06 878 vorgeschlagenen Meßsysteme bildet und das zum Zwecke einer Naß-Kalibrierung mit Strömungen mit entsprechend variierten Massendurchflußraten, Dichten und Viskositäten beaufschlagt wird.

Unter Verwendung des Druckdifferenz-Meßwerts $X_{\Delta p}$ ist es nunmehr möglich, die in gewissem Maße auch von den Druckverhältnissen im strömenden Medium beeinflußte Phasendifferenz zwischen den Primärsignalen $s_1$, $s_2$ oder auch die ebenfalls beeinflußte Schwingungsfrequenz zwecks Erhöhung der Meßgenauigkeit von Massendurchfluß- und/oder Dichte-Meßwert im Betrieb entsprechend zu korrigieren. Zudem ist es aber auch möglich, unter Verwendung des Druckdifferenz-Meßwerts $X_{\Delta p}$ das Meßsystem bzw. ein daran angeschlossenes Rohrleitungssystem auf für den Betrieb kritische Zustände hin zu überwachen, etwa das Ausmaß eines durch den Meßwandler selbst zwangsläufig provozierten Druckabfalls im strömenden Medium und/oder das damit einhergehende Risiko von zumeist schädlicher Kavitation im strömenden Medium infolge einer zu hohen Druckabsenkung.

Daher ist gemäß einer weiteren Ausgestaltung der Erfindung die Umformer-Elektronik ferner dafür ausgelegt unter Verwendung des Druckdifferenz-Meßwerts $X_{\Delta p}$ einen Alarm zu generieren, der ein Überschreiten einer vorab definierten, maximal zulässigen Absenkung eines statischen Drucks im durch den Meßwandler strömenden Medium bzw. einen durch den Meßwandler provozierten, zu hohen Druckabfall im Medium, beispielsweise im Umfeld des Meßsystems visuell und/oder akustisch wahrnehmbar, signalisiert. Der Alarm kann z.B. durch das erwähnte Anzeige- und Bedienelement HMI vor Ort zur Anzeige und/oder von einem mittels des Meßsystems gesteuerten Signalhorns zu Gehör gebracht werden.

Alternativ oder in Ergänzung dazu ist die Umformer-Elektronik gemäß einer weiteren Ausgestaltung der Erfindung dafür ausgelegt, anhand des Druckdifferenz-Meßwerts sowie eines intern vorgehaltenen ersten Druck-Meßwerts $X_{p1}$, der einen im strömenden Medium herrschenden, beispielsweise mittels einer das strömende Medium fördernden Pumpe eingeprägten und/oder mittels Ventils eingestellten und/oder mittels eines zusätzlichen Drucksensors gemessenen und/oder mittels der Umformer-Elektronik anhand wenigstens eines der Primärsignale ermittelten und/oder statischen, ersten Druck, $p_{Ref}$, repräsentiert, einen zweiten Druck-Meßwert $X_{p2}$, mit $X_{p2} = X_{p1} - X_{\Delta p}$ zu generieren, der einen statischen zweiten Druck, $p_{krit}$, innerhalb des strömenden Mediums repräsentiert, beispielsweise also einen Druck am Ort des auslaßseitigen Referenzpunkt - hier also dem zweiten der beiden Referenzpunkte, die die durch den Druckdifferenz-Meßwert repräsentierte Druckdifferenz definieren. Für den erwähnten Fall, daß einer der beiden Referenzpunkte, durch entsprechende Wahl der Meßsystemparameter für den Druckabfall-Koeffizienten bzw. die Druckabfall-Kennlinie, an den vorab genau ermittelten Ort minimalen Drucks ($\Delta p = \Delta p_{max}$) innerhalb des im Meßwandler strömenden Medium, gelegt ist kann basierend auf dem zweiten Druck-Meßwert $X_{p2}$ kann so beispielsweise im Betrieb des Meßsystems festgestellt werden, ob innerhalb des Meßwandlers oder ggf. auch unmittelbar im stromabwärts desselben liegenden Auslaufbereich der angeschlossenen Rohrleitung mit einem unzulässig niedrigen statischen Druck im strömenden Medium zu rechnen ist. Daher ist die Umformer-Elektronik nach einer weiteren Ausgestaltung dafür ausgelegt, unter Verwendung des zweiten Druck-Meßwerts $X_{p2}$ ggf. einen Alarm zu generieren, der ein Unterschreiten eines vorab definierten, minimal zulässigen statischen Drucks im Medium und/oder der ein, z.B. sich erst anbahnendes, Auftreten von Kavitation im Medium entsprechend signalisiert, etwa in visuell und/oder akustisch wahrnehmbarer Weise.

Der erste Druck-Meßwerts $X_{p1}$ kann beispielsweise im Betrieb vom erwähnten übergeordneten Datenverarbeitungssystem aus an die Umformer-Elektronik und/oder von einem direkt an die Umformer-Elektronik angeschlossenen, insoweit mit zum Meßsystem zugehörigen Drucksensor an diese übermittelt und daselbst im erwähnten flüchtigen Datenspeicher RAM und/oder im nichtflüchtigen Datenspeicher EEPROM gespeichert werden. Daher umfaßt das Meßsystem gemäß einer Weiterbildung ferner einen im Betrieb mit der Umformer-Elektronik, beispielsweise über eine direkte Punkt-zu-Punkt Verbindung und/oder drahtlos per Funk, kommunizierenden Drucksensor zum Erfassen eines, beispielsweise stromaufwärts eines Einlaßendes des Meßwandlers oder stromabwärts eines Auslaßendes des Meßwandlers, im in einer das Medium führenden Rohrleitung herrschenden statischen Drucks. Alternativ oder in Ergänzung dazu kann der Druck-Meßwert $X_{p1}$ aber auch, beispielsweise unter Anwendung von dem Fachmann u.a. aus den eingangs erwähnten US-B 68 68 740, US-A 57 34 112, US-A 55 76 500, US-A 2008/0034893 oder WO-A 95/29386, WO-A 95/16897 bekannten Druckmeßverfahren, mittels der Umformer-Elektronik direkt anhand der Primärsignale ermittelt werden. Für den Fall, daß der erste Druck-Meßwert $X_{p1}$ nicht genau jenen Druck im Medium repräsentiert, der einem der beiden, dem Druckdifferenz-Meßwerts zugrundeliegenden Referenzpunkten entspricht, etwa weil der den Druck-Meßwert $X_{p1}$ liefernde Drucksensor bzw. weil die den Druck-Meßwert $X_{p1}$ liefernde Pumpe mit Steuerung vom Einlaßende des Meßwandlers weiter entfernt ist, ist der Druck-Meßwert $X_{p1}$ selbstverständlich auf den Referenzpunkt entsprechend umzurechnen, etwa durch entsprechenden Abzug bzw. Zuschlag eines zwischen der mit dem Druck-Meßwert $X_{p1}$ korrespondierenden Meßstelle und dem durch die Kalibration des Meßsystems definierten Referenzpunkt auftretenden bekannten Druckabfalls, bzw. ist die dem oben erwähnte Druckabfall-Koeffizient zugrundeliegenden Druckabfall-Kennlinie durch Auswahl geeigneter Meßsystemparameter entsprechend anzupassen.

Die Meß- und Auswerte-Schaltung des erfindungsgemäßen Meßsystems dient gemäß einer weiteren Ausgestaltung der Erfindung ferner dazu, abgleitet von der durch den Frequenz-Meßwert $X_f$ momentan repräsentierten Schwingungsfrequenz in dem Fachmann an und für sich bekannter Weise zusätzlich auch den zur Ermittlung des Druckdifferenz-Meßwerts benötigten Dichte-Meßwert $X_\rho$ zu generieren, beispielsweise basierend auf der Beziehung:

$$X_\rho = K_{\rho,1} + \frac{K_{\rho,2}}{X_f^2},$$

worin $K_{\rho,1}$, $K_{\rho,2}$, vorab experimentell ermittelte, beispielsweise im nichtflüchtigen Datenspeicher RAM, als Festwerte intern vorgehaltene Meßsystemparameter sind, die zwischen der durch den Frequenz-Meßwert $X_f$ repräsentierten Schwingungsfrequenz und der zu messenden Dichte, $\rho$, entsprechend vermitteln.

Alternativ oder in Ergänzung dazu kann die Auswerteschaltung wie bei In-Line-Meßgeräten der in Rede stehenden Art durchaus üblich ggf. auch dazu verwendet werden, den zur Ermittlung des Druckdifferenz-Meßwerts benötigten Viskositäts-Meßwert $X_\eta$ zu ermitteln, vgl. hierzu auch die eingangs erwähnten US-B 72 84 449, US-B 70 17 424, US-B 69 10 366, US-B 68 40 109, US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal, insb. eine Amplitude und Frequenz von dessen den Nutzmode treibender Stromanteil oder auch eine Amplitude des gesamten, ggf. auch auf eine anhand wenigstens eines der Primärsignale ermittelte Schwingungsamplitude normierten Erregerstroms. Alternativ oder in Ergänzung dazu kann aber auch ein dem Einstellen des Treibersignals bzw. des Erregerstroms dienendes internes Steuersignal oder, beispielsweise im Falle einer Anregung der Vibrationen des wenigstens einen Meßrohrs mit einem Erregerstrom von fest vorgegebener bzw. auf konstant geregelter Amplitude, auch wenigstens eines der Primärsignale, insb. eine Amplitude davon, als ein Maß der für die Ermittlung des Viskositäts-Meßwerts erforderlichen Erregerenergie oder Erregerleistung bzw. Dämpfung dienen.

Die vorgenannten, insb. auch die dem Erzeugen des Druckdifferenz-Meßwerts $X_{\Delta p}$ bzw. anderer der vorgenannten Meßwerte jeweils dienenden, Rechenfunktionen können z.B. mittels des oben erwähnten Mikrocomputers der Auswerte-Schaltung μC oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden oder beispielsweise auch die Funktionsweise der erwähnten Amplituden- bzw. Frequenzregelschaltung für die Erregeranordnung nachbilden, sowie deren Übersetzung in der Umformer-Elektronik entsprechend ausführbare Programm-Codes ist dem Fachmann an und für sich geläufig und bedarf daher - jedenfalls in Kenntnis der vorliegenden Erfindung - keiner detailierteren Erläuterung. Selbstverständlich können vorgenannte Formeln bzw. andere mit der Umformer-Elektronik realisierte Funktionalitäten des Meßsystems auch ohne weiteres ganz oder teilweise mittels entsprechender diskret aufgebauter und/oder hybriden, also gemischt analog-digitalen, Rechenschaltungen in der Umformer-Elektronik ME realisiert werden.

**Patentansprüche**

1. Meßsystem, insb. Kompakt-Meßgerät und/oder Coriolis-Massedurchfluß-Meßgerät, für, insb. in Rohrleitungen, strömende Medien, welches Meßsystem umfaßt:

   - einen im Betrieb von einem Medium, insb. einem Gas und/oder einer Flüssigkeit, einer Paste oder einem Pulver oder einem anderen fließfähigem Material, durchströmten Meßwandler (MW) vom Vibrationstyp zum Erzeugen von mit Parametern des strömenden Mediums, insb. einer Massendurchflußrate, einer Dichte und/oder einer Viskosität, korrespondierenden Primärsignalen sowie eine mit dem Meßwandler elektrisch gekoppelte Umformer-Elektronik (ME) zum Ansteuern des Meßwandlers und zum Auswerten von vom Meßwandler gelieferten Primärsignalen,
   - wobei der Meßwandler

     -- wenigstens ein Meßrohr (10; 10') zum Führen von strömendem Medium,
     -- wenigstens einen elektro-mechanischen Schwingungserreger zum Anregen und/oder Aufrechterhalten von Vibrationen des wenigstens einen Meßrohrs,
     -- einen ersten Schwingungssensor (51) zum Erfassen von, insb. einlaßseitigen, Vibrationen zumindest des wenigstens einen Meßrohrs und zum Erzeugen eines, insb. einlaßseitigen, Vibrationen zumindest des wenigstens einen Meßrohrs repräsentierenden ersten Primärsignals ($s_1$) des Meßwandlers, und
     -- einen zweiten Schwingungssensor (52) zum Erfassen von, insb. auslaßseitigen, Vibrationen zumindest des wenigstens einen Meßrohrs und zum Erzeugen eines, insb. auslaßseitige, Vibrationen zumindest des wenigstens einen Meßrohrs repräsentierenden zweiten Primärsignals ($s_2$) des Meßwandlers aufweist; und

   - wobei die Umformer-Elektronik ausgestaltet ist,

     -- wenigstens ein Vibrationen, insb. Biegeschwingungen, des wenigstens einen Meßrohrs bewirkendes Treibersignal ($i_{exc}$) für den Schwingungserreger zu liefern, und
     -- mittels des ersten Primärsignals und mittels des zweiten Primärsignals sowie unter Verwendung eines eine Reynoldszahl, Re, für im Meßwandler strömendes Medium repräsentierenden Reynoldszahl-Meßwerts einen Druckdifferenz-Meßwert ($X_{\Delta p}$) zu generieren, der eine zwischen zwei vorgegebenen, insb. innerhalb des Meßwandlers lokalisierten, Referenzpunkten im strömenden Medium auftretende Druckdifferenz repräsentiert, insb. derart, daß ein erster der beiden Referenzpunkte einlaßseitig und ein zweiter der beiden Referenzpunkte auslaßseitig im Meßwandler lokalisiert sind, und

   - wobei die Umformer-Elektronik ausgestaltet ist, den Reynoldszahl-Meßwert mittels des Treibersignals sowie mittels wenigstens eines der Primärsignale zu generieren.

2. Meßsystem nach einem der vorherigen Ansprüche, wobei die Umformer-Elektronik ausgestaltet ist, den Druckdifferenz-Meßwerts ($X_{\Delta p}$) unter Verwendung eines intern vorgehaltenen Viskositäts-Meßwert ($X_\eta$) zu generieren, der eine Viskosität, $\eta$, von im Meßwandler strömendem Medium repräsentiert.

3. Meßsystem nach einem der vorherigen Ansprüche, wobei die Umformer-Elektronik ausgestaltet ist, zur Ermittlung des Druckdifferenz-Meßwerts ($X_{\Delta p}$) mittels des ersten Primärsignals und mittels des zweiten Primärsignals einen Phasendifferenz-Meßwert ($X_{\Delta\varphi}$) zu generieren, der eine zwischen dem ersten Primärsignal ($s_1$) und dem zweiten Primärsignal ($s_2$) existierenden, insb. von einer Massendurchflußrate, $\dot{m}$, von im Meßwandler strömendem Medium abhängige, Phasendifferenz, $\Delta\varphi_l$, repräsentiert.

4. Meßsystem nach einem der vorherigen Ansprüche, wobei die Umformer-Elektronik ausgestaltet ist, zur Ermittlung des Druckdifferenz-Meßwerts ($X_{\Delta p}$) anhand wenigstens eines der Primärsignale und/oder anhand des wenigstens einen Treibersignals einen Frequenz-Meßwert ($X_f$) zu generieren, der eine Schwingungsfrequenz, $f_{exc}$, von Vibrationen des wenigstens einen Meßrohrs, insb. von Biegeschwingungen des wenigstens einen Meßrohrs um eine ein einlaßseitiges erstes Meßrohrende des Meßrohrs und ein auslaßseitiges zweites Meßrohrende des Meßrohrs imaginär verbindende gedachte Schwingungsachse mit einer natürlichen Resonanzfrequenz des Meßwandlers, repräsentiert.

5. Meßsystem nach einem der vorherigen Ansprüche,

- wobei die Umformer-Elektronik ausgestaltet ist, zur Ermittlung des Druckdifferenz-Meßwerts ($X_{\Delta p}$) mittels des ersten Primärsignals und mittels des zweiten Primärsignals einen Massendurchfluß-Meßwert ($X_m$) zu generieren, der eine Massendurchflußrate, m , von im Meßwandler strömendem Medium repräsentiert, und
- wobei die Umformer-Elektronik ausgestaltet ist, den Druckdifferenz-Meßwerts ($X_{\Delta p}$) unter Verwendung eines Dichte-Meßwerts ($X\rho$) zu generieren, der eine Dichte, $\rho$, von im Meßwandler strömendem Medium repräsentiert, insb. derart, daß die Umformer-Elektronik den Druckdifferenz-Meßwert basierend auf der Beziehung:

$$X_{\Delta p} = \left( K_{\varsigma,1} + K_{\varsigma,2} \cdot X_{Re}^{K_{\varsigma,3}} \right) \cdot K_{Ekin} \cdot \frac{(X_m)^2}{X_\rho}$$

generiert, wobei $K_{\varsigma,1}$, $K_{\varsigma,2}$, $K_{\varsigma,3}$, $K_{Ekin}$ vorab experimentell, insb. im Zuge einer Kalibrierung des Meßsystems und/oder mittels computergestützter Berechnungen, ermittelte, insb. in einem in der Umformer-Elektronik vorgesehenen nichtflüchtigen Datenspeicher als Festwerte intern vorgehaltene, Meßsystemparameter sind.

6. Meßsystem nach Anspruch 5 in Verbindung mit Anspruch 3 und 4,

- bei welchem Meßsystem die Umformer-Elektronik ausgestaltet ist, den Massendurchfluß-Meßwert ($X_m$) basierend auf der Beziehung:

$$X_m = K_m \cdot \frac{X_{\Delta\varphi}}{X_f}$$

zu generieren, wobei $K_m$ ein vorab experimentell, insb. im Zuge einer Kalibrierung des Meßsystems und/oder mittels computergestützter Berechnungen, ermittelter, insb. in einem in der Umformer-Elektronik vorgesehenen nichtflüchtigen Datenspeicher als Festwerte intern vorgehaltener, Meßsystemparameter ist; und/oder
- wobei die Umformer-Elektronik ausgestaltet ist, den Dichte-Meßwert ($X_\rho$) mittels des Frequenz-Meßwert ($X_f$) zu generieren, insb. basierend auf der Beziehung:

$$X_\rho = K_{\rho,1} + \frac{K_{\rho,2}}{X_f^2},$$

wobei $K_{\rho,1}$, $K_{\rho,2}$, vorab experimentell, insb. im Zuge einer Kalibrierung des Meßsystems und/oder mittels computergestützter Berechnungen, ermittelte, insb. in einem in der Umformer-Elektronik vorgesehenen nichtflüchtigen Datenspeicher als Festwerte intern vorgehaltene, Meßsystemparameter sind.

7. Meßsystem nach Anspruch 2 und 5,

- wobei die Umformer-Elektronik ausgestaltet ist, den Reynoldzahl-Meßwert unter Verwendung sowohl des Massendurchfluß-Meßwerts ($X_m$) als auch des Viskositäts-Meßwerts ($X_\eta$) generieren, insb. basierend auf der Beziehung:

$$X_{Re} = K_{Re} \cdot \frac{X_m}{X_\eta}$$

generiert, wobei $K_{Re}$ ein vorab experimentell, insb. im Zuge einer Kalibrierung des Meßsystems und/oder mittels computergestützter Berechnungen, ermittelter, insb. in einem in der Umformer-Elektronik vorgesehenen nichtflüchtigen Datenspeicher als Festwerte intern vorgehaltener, Meßsystemparameter ist.

8. Meßsystem nach einem der vorherigen Ansprüche, wobei die Umformer-Elektronik ausgestaltet ist, zur Ermittlung des Druckdifferenz-Meßwerts ($X_{\Delta p}$) mittels des ersten Primärsignals und mittels des zweiten Primärsignals einen Strömungsenergie-Meßwert ($X_{Ekin}$) zu generieren, der eine von einer Dichte, $\rho$, und einer Strömungsgeschwindigkeit, U, des im Meßwandler strömenden Mediums abhängige kinetische Energie, $\rho U^2$, von im Meßwandler strömendem Medium repräsentiert.

9. Meßsystem nach Anspruch 8, in Verbindung mit Anspruch 5, wobei die Umformer-Elektronik ausgestaltet ist, den Strömungsenergie-Meßwert ($X_{Ekin}$) basierend auf der Beziehung:

$$X_{Ekin} = K_{Ekin} \cdot \frac{(X_m)^2}{X_\rho}$$

zu generieren, wobei $K_{Ekin}$ ein vorab experimentell, insb. im Zuge einer Kalibrierung des Meßsystems und/oder mittels computergestützter Berechnungen, ermittelter, insb. in einem in der Umformer-Elektronik vorgesehenen nichtflüchtigen Datenspeicher als Festwerte intern vorgehaltener, Meßsystemparameter ist.

10. Meßsystem nach einem der vorherigen Ansprüche, wobei die Umformer-Elektronik ausgestaltet ist, zur Ermittlung des Druckdifferenz-Meßwerts ($X_{\Delta p}$) einen Druckabfall-Koeffizienten ($X_\zeta$) zu generieren, der einen von der momentanen Reynoldszahl, Re, des strömenden Mediums abhängigen Druckabfall über dem Meßwandler, bezogen auf eine momentane kinetische Energie des im Meßwandler strömenden Mediums repräsentiert, insb. basierend auf der Beziehung:

$$X_\zeta = K_{\zeta,1} + K_{\zeta,2} \cdot X_{Re}^{K_{\zeta,3}},$$

wobei $K_{\zeta,1}$, $K_{\zeta,2}$, $K_{\zeta,3}$, vorab experimentell ermittelte, insb. in einem in der Umformer-Elektronik vorgesehenen nichtflüchtigen Datenspeicher als Festwerte intern vorgehaltene, Meßsystemparameter sind.

11. Meßsystem nach Anspruch 10, in Verbindung mit Anspruch 5, wobei die Umformer-Elektronik ausgestaltet ist, den Druckdifferenz-Meßwert unter Verwendung des Druckabfall-Koeffizienten ($X_\zeta$) zu generieren, insb. basierend auf der Beziehung:

$$X_{\Delta p} = X_\zeta \cdot K_{Ekin} \cdot \frac{(X_m)^2}{X_\rho},$$

wobei $K_{Ekin}$ ein vorab ermittelter, insb. in einem in der Umformer-Elektronik vorgesehenen nichtflüchtigen Datenspeicher als Festwerte intern vorgehaltener, Meßsystemparameter ist.

12. Meßsystem nach einem der vorherigen Ansprüche, wobei die Umformer-Elektronik ausgestaltet ist, unter Verwendung des Druckdifferenz-Meßwerts und anhand eines, insb. in einem in der Umformer-Elektronik vorgesehenen flüchtigen Datenspeicher intern vorgehaltenen, ersten Druck-Meßwerts ($X_{p1}$), der einen, insb. stromaufwärts eines Auslaßendes des Meßwandlers und/oder stromabwärts eines Einlaßendes des Meßwandlers, im strömenden Medium herrschenden ersten Druck, $p_{Ref}$, repräsentiert, einen zweiten Druck-Meßwert ($X_{p2}$) zu generieren, der einen, insb. minimalen und/oder für das Meßsystem als kritisch eingestuften, statischen zweiten Druck, $p_{krit}$, innerhalb des strömenden Mediums repräsentiert.

13. Meßsystem nach Anspruch 12, welches Meßsystem zum Erzeugen des ersten Druck-Meßwerts ($X_{p1}$) weiters einen dem Erfassen eines, insb. stromaufwärts eines Einlaßendes des Meßwandlers oder stromabwärts eines Auslaßendes des Meßwandlers, im in einer das Medium führenden Rohrleitung herrschenden statischen Drucks dienenden, im Betrieb mit der Umformer-Elektronik kommunizierenden Drucksensor umfaßt.

14. Meßsystem nach Anspruch 12 oder 13,

- wobei die Umformer-Elektronik ausgestaltet ist, unter Verwendung des zweiten Druck-Meßwerts ($X_{p2}$) einen Alarm zu generieren, der ein Unterschreiten eines vorab definierten, minimal zulässigen statischen Drucks im Medium, insb. visuell und/oder akustisch wahrnehmbar, signalisiert; und/oder

- wobei die Umformer-Elektronik ausgestaltet ist, unter Verwendung des zweiten Druck-Meßwerts ($X_{p2}$) einen Alarm zu generieren, der ein, insb. sich anbahnendes, Auftreten von Kavitation im Medium, insb. visuell und/oder akustisch wahrnehmbar, signalisiert.

**15.** Meßsystem nach einem der vorherigen Ansprüche,

- wobei die Umformer-Elektronik ausgestaltet ist, unter Verwendung des Druckdifferenz-Meßwerts einen Alarm zu generieren, der ein Überschreiten einer vorab definierten, maximal zulässigen Absenkung eines statischen Drucks im durch den Meßwandler strömenden Medium, insb. visuell und/oder akustisch wahrnehmbar, signalisiert; und/oder

- wobei die Umformer-Elektronik ausgestaltet ist, unter Verwendung des Druckdifferenz-Meßwerts einen Alarm zu generieren, der einen durch den Meßwandler provozierten, zu hohen Druckabfall im Medium, insb. visuell und/oder akustisch wahrnehmbar, signalisiert.

**16.** Meßsystem nach einem der vorherigen Ansprüche,

- wobei der Meßwandler weiters ein Meßwandler-Gehäuse (100) mit einem, insb. einen Anschlußflansch für ein Medium dem Meßwandler zuführendes Leitungssegment aufweisenden, einlaßseitigen ersten Gehäuseende und einem, insb. einen Anschlußflansch für ein Medium vom Meßwandler abführendes Leitungssegment aufweisenden, auslaßseitigen zweiten Gehäuseende aufweist, und

- wobei der Druckdifferenz-Meßwert ($X_{\Delta p}$) eine vom ersten Gehäuseende bis hin zum zweiten Gehäuseende im strömenden Medium insgesamt auftretende Druckdifferenz repräsentiert, insb. derart daß der erste Referenzpunkt für die durch den Druckdifferenz-Meßwert ($X_{\Delta p}$) repräsentierte Druckdifferenz im einlaßseitigen ersten Gehäuseende des Meßwandler-Gehäuses (100) und der zweite Referenzpunkt für die durch den Druckdifferenz-Meßwert ($X_{\Delta p}$) repräsentierte Druckdifferenz im auslaßseitigen zweiten Gehäuseende des Meßwandler-Gehäuses (100) lokalisiert sind.

**17.** Meßsystem nach Anspruch 16,

- wobei das einlaßseitige erste Gehäuseende des Meßwandler-Gehäuses (100) mittels eines zwei jeweils voneinander beabstandeten Strömungsöffnungen aufweisenden einlaßseitigen ersten Strömungteiler (15) und das auslaßseitige zweite Gehäuseende des Meßwandler-Gehäuses (100) mittels eines zwei jeweils voneinander beabstandeten Strömungsöffnungen aufweisenden auslaßseitigen zweiten Strömungsteilers (16) gebildet sind,

- wobei der Meßwandler zwei zueinander parallele Meßrohre zum Führen von strömendem Medium aufweist, von denen

-- ein erstes Meßrohr (10) mit einem einlaßseitigen ersten Meßrohrende in eine erste Strömungsöffnung des ersten Strömungsteilers (15) und mit einem auslaßseitigen zweiten Meßrohrende in eine erste Strömungsöffnung des zweiten Strömungsteilers (16) mündet, und

-- ein zweites Meßrohr (10') mit einem einlaßseitigen ersten Meßrohrende in eine zweite Strömungsöffnung des ersten Strömungsteilers (15) und mit einem auslaßseitigen zweiten Meßrohrende in eine zweite Strömungsöffnung des zweiten Strömungsteilers (16) mündet;

- wobei der wenigstens einen elektro-mechanischen Schwingungserreger dem Anregen und/oder Aufrechterhalten von gegengleichen Vibrationen des ersten Meßrohrs und des zweiten Meßrohrs, insb. von Biegeschwingungen jedes der Meßrohre um eine das jeweilige erste Meßrohrende und das jeweilige zweite Meßrohrende imaginär verbindende gedachte Schwingungsachse mit einer natürlichen Resonanzfrequenz des Meßwandlers, dient; und

- wobei das mittels des ersten Schwingungssensors erzeugte erste Primärsignal einlaßseitige Vibrationen des ersten Meßrohrs relativ zum zweiten Meßrohr und das mittels des zweiten Schwingungssensors erzeugte zweite Primärsignal auslaßseitige Vibrationen des ersten Meßrohrs relativ zum zweiten Meßrohr repräsentieren.

**18.** Verfahren zum Messen einer innerhalb eines strömenden Mediums auftretenden Druckdifferenz, welches Verfahren folgende Schritte umfaßt::

- Strömenlassen des Mediums durch wenigstens ein Meßrohr;

- Anregen des wenigstens einen Meßrohrs zu Vibrationen, insb. Biegeschwingungen um eine ein einlaßseitiges erstes Meßrohrende des Meßrohrs und ein auslaßseitiges zweites Meßrohrende des Meßrohrs imaginär verbindende gedachte Schwingungsachse;

- Erzeugen eines einlaßseitige Vibrationen zumindest des wenigstens einen Meßrohrs repräsentierenden ersten Primärsignals sowie eines auslaßseitige Vibrationen zumindest des wenigstens einen Meßrohrs repräsentierenden zweiten Primärsignals;

- Verwenden des ersten Primärsignals und/oder des zweiten Primärsignals zum Erzeugen eines eine Reynoldszahl, *Re,* für das strömende Medium repräsentierenden Reynoldszahl-Meßwerts, sowie

- Verwenden des Reynoldszahl-Meßwerts zum Erzeugen eines Druckdifferenz-Meßwerts, der eine zwischen zwei, insb. innerhalb des Meßwandler lokalisierten, Referenzpunkten im strömenden Medium auftretende Druckdifferenz repräsentiert.

**19.** Verfahren nach dem vorherigen Anspruch, weiters umfassend:

- Erzeugen eines eine Massendurchflußrate des strömenden Mediums repräsentierenden Massendurchfluß-Meßwerts, insb. mittels des ersten Primärsignals und mittels des zweiten Primärsignals;

- Erzeugen eines eine Dichte des strömenden Mediums repräsentierenden Dichte-Meßwerts; und

- Verwenden des Massendurchfluß-Meßwerts, des Dichte-Meßwerts sowie des Reynoldszahl-Meßwerts zum Erzeugen des Druckdifferenz-Meßwerts.

**Claims**

**1.** Measuring system, particularly a compact measuring device and/or a Coriolis mass flowmeter, for flowing media, particularly media flowing through pipes, said measuring system comprising:

- a vibronic-type transducer (MW) through which, during operation, a medium flows, particularly a gas and/or liquid, a paste or a powder or another free-flowing material, designed to generate primary signals corresponding to parameters of the flowing medium, particularly a mass flow rate, a density and/or a viscosity, as well as transmitter electronics (ME) that are electrically coupled to the transducer designed to control the transducer and to evaluate primary signals delivered by the transducer,

- wherein the transducer comprises

-- at least one measuring tube (10, 10') designed to conduct flowing medium,

-- at least one electromechanical vibration exciter to generate and/or maintain vibrations of the at least one measuring tube,

-- a first vibration sensor (51) designed to record vibrations, particularly on the inlet side, at least of the at least one measuring tube and to generate a first primary signal ($s_1$) of the transducer that represents vibrations, particularly on the inlet side, at least of the at least one measuring tube; and

-- a second vibration sensor (52) designed to record vibrations, particularly on the outlet side, at least of the at least one measuring tube and to generate a second primary signal ($s_2$) of the transducer that represents vibrations, particularly on the outlet side, at least of the at least one measuring tube; and

- wherein the transmitter electronics are equipped

-- to deliver at least one driver signal ($i_{exc}$) for the vibration exciter which causes vibrations, particularly bending vibrations, of the at least one measuring tube, and

-- to generate a pressure difference measured value ($X_{\Delta p}$), using the first primary signal and the second primary signal and using a Reynolds number measured value that represents a Reynolds number *Re* for medium flowing through the transducer, said pressure difference measured value representing a pressure difference occurring between two predefined reference points in the flowing medium, particularly reference points located within the transducer, particularly in such a way that a first of the two reference points is located in the transducer on the inlet side and a second of the two reference points is located in the transducer on the outlet side, and

- wherein the transmitter electronics are designed to generate the Reynolds number measured value using the driver signal and using at least one of the primary signals.

2. Measuring system as claimed in one of the previous claims, wherein the transmitter electronics are designed to generate the pressure difference measured value ($X_{\Delta p}$) using a viscosity measured value ($X_\eta$) that is maintained internally and represents a viscosity, $\eta$, of the medium flowing through the transducer.

3. Measuring system as claimed in one of the previous claims, wherein, for the determination of the pressure difference measured value ($X_{\Delta p}$) using the first primary signal and the second primary signal, the transmitter electronics are designed to generate a phase difference measured value ($X_{\Delta\varphi}$) that represents a phase difference $\Delta\varphi_l$ that exists between the first primary signal ($s_1$) and the second primary signal ($s_2$), particularly a phase difference that depends on a mass flow rate, $m$, of the medium flowing through the transducer.

4. Measuring system as claimed in one of the previous claims, wherein for the determination of the pressure difference measured value ($X_{\Delta p}$) using at least one of the primary signals and/or at least the one driver signal, the transmitter electronics are designed to generate a frequency measured value ($X_f$), which represents an excitation frequency, $f_{exc}$, of vibrations of the at least one measuring tube, particularly of bending vibrations of the at least one measuring tube around an imaginary axis of vibration connecting in an imaginary manner a first end of the measuring tube on the inlet side and a second end of the measuring tube on the outlet side, with a natural resonance frequency of the transducer.

5. Measuring system as claimed in one of the previous claims,

- wherein, for the determination of the pressure difference measured value ($X_{\Delta p}$) using the first primary signal and using the second primary signal, the transmitter electronics are designed to generate a mass flow measured value ($X_m$), which represents a mass flow rate, $m$, of medium flowing through the transducer, and
- wherein the transmitter electronics are designed to generate the pressure difference measured value ($X_{\Delta p}$) using a density measured value ($X_\rho$), which represents a density, $\rho$, of medium flowing through the transducer, particularly in such a way that the transmitter electronics generate the pressure difference measured value based on the following formula:

$$X_{\Delta p} = (K_{\zeta.1} + K_{\zeta.2} \cdot X_{Re} \text{ power } K_{\zeta.3}) \cdot K_{Ekin} \cdot ((X_m)^2 / X_\rho)$$

where $K_{\zeta.1}$, $K_{\zeta.2}$, $K_{\zeta.3}$, $K_{Ekin}$ are measuring system parameters determined experimentally in advance, particularly in the course of a calibration of the measuring system and/or using computer-assisted calculations, said parameters particularly being saved internally as fixed values in a non-volatile data memory provided in the transmitter electronics.

6. Measuring system as claimed in Claim 5 in connection with Claims 3 and 4,

- wherein, in said measuring system, the transmitter electronics are designed to generate the mass flow measured value ($X_m$) based on the following formula:

$$X_m = K_m \cdot (X_{\Delta\varphi} / X_f)$$

wherein $K_m$ is a measuring system parameter determined experimentally in advance, particularly in the course of a calibration of the measuring system and/or using computer-assisted calculations, said parameter particularly being saved internally as fixed values in a non-volatile data memory provided in the transmitter electronics; and/or
- wherein the transmitter electronics are designed to generate the density measured value ($X_\rho$) using the frequency measured value ($X_f$), particularly based on the following formula:

$$X_\rho = K_{\rho,1} + (K_{\rho,2} / X_f^2),$$

where $K_{\rho,1}$, $K_{\rho,2}$ are measuring system parameters determined experimentally in advance, particularly in the course of a calibration of the measuring system and/or using computer-assisted calculations, said parameters particularly being saved internally as fixed values in a non-volatile data memory provided in the transmitter electronics.

7. Measuring system as claimed in Claims 2 and 5,

- wherein the transmitter electronics are designed to generate the Reynolds number measured value using both the mass flow measured value ($X_m$) and the viscosity measured value ($X_\eta$), particularly based on the following formula:

$$X_{Re} = K_{Re} \cdot (X_m / X_\eta),$$

where $K_{Re}$ is a measuring system parameter determined experimentally in advance, particularly in the course of a calibration of the measuring system and/or using computer-assisted calculations, said parameter particularly being saved internally as fixed values in a non-volatile data memory provided in the transmitter electronics.

8. Measuring system as claimed in one of the previous claims, wherein, for the determination of the pressure difference measured value ($X_{\Delta p}$) using the first primary signal and the second primary signal, the transmitter electronics are designed to generate a flow energy measured value ($X_{Ekin}$), which represents a kinetic energy, $\rho U^2$, of medium that flows through the transducer and is dependent on a density, $\rho$, and a flow velocity, U, of the medium flowing through the transducer.

9. Measuring system as claimed in Claim 8, in connection with Claim 5, wherein the transmitter electronics are designed to generate the flow energy measured value ($X_{Ekin}$) based on the following formula:

$$X_{Ekin} = K_{Ekin} \cdot ((X_m)^2 / X_\rho)$$

where $K_{Ekin}$ is a measuring system parameter determined experimentally in advance, particularly in the course of a calibration of the measuring system and/or using computer-assisted calculations, said parameter particularly being saved internally as fixed values in a non-volatile data memory provided in the transmitter electronics.

10. Measuring system as claimed in one of the previous claims, wherein, for the determination of the pressure difference measured value ($X_{\Delta p}$), the transmitter electronics are designed to generate a pressure drop coefficient ($X_\zeta$) which represents a pressure drop over the transducer, said pressure drop being dependent on the current Reynolds number, *Re,* of the flowing medium, in relation to a current kinetic energy of the medium flowing through the transducer, particularly based on the following formula:

$$X_\zeta = K_{\zeta.1} + K_{\zeta.2} \cdot X_{Re} \text{ power } K_{\zeta.3},$$

where $K_{\zeta.1}$, $K_{\zeta.2}$, $K_{\zeta.3}$ are measuring system parameters determined experimentally in advance, and particularly saved internally as fixed values in a non-volatile data memory provided in the transmitter electronics.

11. Measuring system as claimed in Claim 10, in connection with Claim 5, wherein the transmitter electronics are designed to generate the pressure difference measured value using the pressure drop coefficient ($X_\zeta$), particularly based on the following formula:

$$X_{\Delta p} = X_\zeta \cdot K_{Ekin} \cdot ((X_m)^2 / X_\rho),$$

where $K_{Ekin}$ is a measuring system parameter determined in advance, and particularly saved internally as fixed values in a non-volatile data memory provided in the transmitter electronics.

12. Measuring system as claimed in one of the previous claims, wherein the transmitter electronics are designed to generate a second pressure measured value ($X_{p2}$), which represents a static second pressure $p_{krit}$ within the flowing medium, particularly a minimum pressure and/or a pressure categorized as critical for the measuring system, using the pressure difference measured value and a first pressure measured value ($X_{p1}$) that is saved in particular in a volatile data memory provided in the transmitter electronics and represents a first pressure, $p_{ref,}$ present in the flowing medium, particularly a pressure upstream from the outlet end of the transducer and/or downstream from the inlet end of the transducer.

13. Measuring system as claimed in Claim 12, wherein, for the generation of the first pressure measured value ($X_{p1}$), said system further comprises a pressure sensor that communicates with the transmitter electronics during operation and serves to measure a static pressure which is present in a pipe that conducts the medium, particularly a pressure upstream from an inlet end of the transducer or downstream from an outlet end of the transducer.

14. Measuring system as claimed in Claim 12 or 13,

   - wherein the transmitter electronics are designed to generate an alarm using the second pressure measured value ($X_{p2}$), wherein said alarm signals an undershooting of a predefined minimum static pressure that is permitted in the medium, particularly in a manner which can be perceived visually and/or acoustically; and/or
   - wherein the transmitter electronics are designed to generate an alarm using the second pressure measured value ($X_{p2}$), wherein said alarm signals an occurrence, particularly an imminent occurrence, of cavitation in the medium, particularly in a manner which can be perceived visually and/or acoustically.

15. Measuring system as claimed in one of the previous claims,

   - wherein the transmitter electronics are designed to generate an alarm using the pressure difference measured value, wherein said alarm signals an overshooting of a predefined maximum drop in static pressure permitted in the medium flowing through the transducer, particularly in a manner which can be perceived visually and/or acoustically; and/or
   - wherein the transmitter electronics are designed to generate an alarm using the pressure difference measured value, wherein said alarm signals an excessively high drop in pressure in the medium which is caused by the transducer, particularly in a manner which can be perceived visually and/or acoustically.

16. Measuring system as claimed in one of the previous claims,

   - wherein the transducer further comprises a transducer housing (100) with a first housing end on the inlet side, particularly with a connection flange for a pipe segment that conducts medium to the transducer, and a second housing end on the outlet side, particularly with a connection flange for a pipe segment that conducts medium away from the transducer, and
   - wherein the pressure difference measured value ($X_{\Delta p}$) represents a total pressure difference occurring from the first housing end through to the second housing end in the flowing medium, particularly in such a way that the first reference point for the pressure difference represented by the pressure difference measured value ($X_{\Delta p}$) is located in the first housing end of the transducer housing (100) on the inlet side and the second reference point for the pressure difference represented by the pressure difference measured value ($X_{\Delta p}$) is located in the second housing end of the transducer housing (100) on the outlet side.

17. Measuring system as claimed in Claim 16,

   - wherein the first housing end of the transducer housing (100) on the inlet side is formed by a first flow divider (15) located on the inlet side and featuring two flow openings spaced apart from one another, and wherein the second housing end of the transducer housing (100) on the outlet side is formed by a second flow divider (16) located on the outlet side and featuring two flow openings spaced apart from one another,
   - wherein the transducer has two parallel measuring tubes designed to conduct flowing medium, of which

      -- a first measuring tube (10) enters into a first flow opening of the first flow divider (15) with a first measuring tube end on the inlet side, and enters into a first flow opening of the second flow divider (16) with a second measuring tube end on the outlet side, and
      -- a second measuring tube (10') enters into a second flow opening of the first flow divider (15) with a first measuring tube end on the inlet side, and enters into a second flow opening of the second flow divider (16) with a second measuring tube end on the outlet side;

   - wherein the at least one electromechanical vibration exciter is used to generate and/or maintain contrasting vibrations of the first measuring tube and of the second measuring tube, particularly bending vibrations of each of the measuring tubes around an imaginary axis of vibration which connects in an imaginary manner the first measuring tube end and the second measuring tube end with a natural resonance frequency of the transducer;

and

- wherein the first primary signal generated using the first vibration sensor represents inlet-side vibrations of the first measuring tube in relation to the second measuring tube and wherein the second primary signal generated using the second vibration sensor represents outlet-side vibrations of the first measuring tube in relation to the second measuring tube.

18. Procedure to measure a pressure difference occurring within a flowing medium, said procedure comprising the following steps:

- The medium is allowed to flow through at least one measuring tube;
- Excitation of the at least one measuring tube to perform vibrations, particularly bending vibrations, around an imaginary axis of vibration connecting in an imaginary manner a first measuring tube end of the measuring tube on the inlet side and a second measuring tube end of the measuring tube on the outlet side;
- Generation of a first primary signal that represents inlet-side vibrations at least of the at least one measuring tube and generation of a second primary signal that represents outlet-side vibrations at least of the at least one measuring tube;
- Use of the first primary signal and/or the second primary signal to generate a Reynolds number measured value that represents a Reynolds number, *Re,* for the flowing medium, and
- Use of the Reynolds number measured value to generate a pressure difference measured value which represents a pressure difference between two reference points in the flowing medium, particularly reference points located within the transducer.

19. Procedure as claimed in the previous claim, further comprising:

- Generation of a mass flow measured value representing a mass flow rate of the flowing medium, particularly using the first primary signal and the second primary signal;
- Generation of a density measured value representing a density of the flowing medium; and
- Use of the mass flow measured value, the density value and the Reynolds number for the generation of the pressure difference measured value.

**Revendications**

1. Système de mesure, notamment un appareil de mesure compact et/ou un débitmètre massique Coriolis, pour des produits en écoulement, notamment dans des conduites, lequel système de mesure comprend :

- un transducteur (MW) du type à vibrations, parcouru en fonctionnement par le produit, notamment un gaz et/ou un liquide, une pâte ou une poudre ou une autre matière fluide, lequel transducteur est destiné à générer des signaux primaires correspondants à des paramètres du produit en écoulement, notamment un débit massique, une densité et/ou une viscosité,
ainsi qu'une électronique de transmetteur (ME) couplée électriquement au transducteur et destinée à commander le transducteur et à interpréter les signaux primaires fournis par le transducteur,
- pour lequel le transducteur comporte

-- au moins un tube de mesure (10, 10') destiné à acheminer le produit en écoulement,
-- au moins un excitateur de vibrations électromécanique destiné à l'excitation et/ou au maintien des vibrations de l'au moins un tube de mesure,
-- un premier capteur de vibration (51) destiné à la détection des vibrations, notamment côté entrée, de l'au moins un tube de mesure, et destiné à la génération d'un premier signal primaire ($s_1$) du transducteur, représentant les vibrations, notamment côté entrée, de l'au moins un tube de mesure ; et
-- un deuxième capteur de vibration (52) destiné à la détection des vibrations, notamment côté sortie, de l'au moins un tube de mesure, et destiné à la génération d'un deuxième signal primaire ($s_2$) du transducteur, représentant les vibrations, notamment côté sortie, de l'au moins un tube de mesure ; et

- pour lequel l'électronique de transmetteur

-- délivre au moins un signal d'excitation ($i_{exc}$) destiné au dispositif excitateur de vibrations, provoquant des vibrations, notamment des vibrations de flexion de l'au moins un tube de mesure, et

-- génère - au moyen du premier signal primaire et au moyen du deuxième signal primaire, ainsi qu'en utilisant une valeur mesurée de nombre de Reynolds représentant un nombre de Reynolds, *Re,* pour le produit s'écoulant dans le transducteur - une valeur mesurée de différence de pression ($X_{\Delta p}$), qui représente une différence de pression apparaissant dans le produit en écoulement entre deux points de référence prédéfinis, notamment localisés à l'intérieur du transducteur, notamment de telle manière qu'un premier des deux points de référence est localisé côté entrée et un deuxième des deux points de référence est localisé côté sortie à l'intérieur du transducteur, et

- l'électronique de transmetteur est conçue de telle sorte à générer la valeur mesurée de nombre de Reynolds au moyen du signal d'excitation ainsi qu'au moyen d'au moins l'un des signaux primaire.

2. Système de mesure selon l'une des revendications précédentes, pour lequel l'électronique de transmetteur est conçue de telle sorte à générer la valeur mesurée de différence de pression ($X_{\Delta p}$) en utilisant une valeur mesurée de viscosité ($X_{\eta}$) conservée en interne, qui représente une viscosité, $\eta$, du produit s'écoulant dans le transducteur.

3. Système de mesure selon l'une des revendications précédentes, pour lequel l'électronique de transmetteur génère, pour la détermination de la valeur mesurée de différence de pression ($X_{\Delta p}$) au moyen du premier signal primaire et au moyen du deuxième signal primaire, une valeur mesurée de différence de phase ($X_{\Delta\varphi}$), qui représente une différence de phase $\Delta\varphi_l$ existant entre le premier signal primaire ($s_1$) et le deuxième signal primaire ($s_2$), notamment dépendant d'un débit massique, *m*, du produit s'écoulant dans le transducteur.

4. Système de mesure selon l'une des revendications précédentes, pour lequel l'électronique de transmetteur génère, pour la détermination de la valeur mesurée de différence de pression ($X_{\Delta p}$) au moyen d'au moins l'un des signaux primaire et/ou au moyen de l'au moins un signal d'excitation, une valeur mesurée de fréquence ($X_f$), qui représente une fréquence de vibration, $f_{exc,}$ des vibrations de l'au moins un tube de mesure, notamment des vibrations de flexion de l'au moins un tube de mesure autour d'un axe de vibration imaginaire reliant de façon imaginaire une première extrémité de tube de mesure côté entrée et une deuxième extrémité de tube de mesure côté sortie, avec une fréquence de résonance naturelle du transducteur.

5. Système de mesure selon l'une des revendications précédentes,

- pour lequel l'électronique de transmetteur génère, pour la détermination de la valeur mesurée de différence de pression ($X_{\Delta p}$) au moyen du premier signal primaire et au moyen du deuxième signal primaire, une valeur mesurée de débit massique ($X_m$), qui représente un débit massique, *m*, du produit s'écoulant dans le transducteur, et
- pour lequel l'électronique de transmetteur génère la valeur mesurée de différence de pression ($X_{\Delta p}$) en utilisant une valeur mesurée de densité ($X_{\rho}$), qui représente une densité, p, du produit s'écoulant dans le transducteur, notamment de telle sorte que l'électronique de transmetteur génère la valeur mesurée de différence de pression en se basant sur la relation suivante :

$$X_{\Delta p} = (K_{\zeta.1} + K_{\zeta.2} \cdot X_{Re} \text{ puiss. } K_{\zeta.3}) \cdot K_{Ekin} \cdot ((X_m)^2 / X_{\rho})$$

où $K_{\zeta.1}, K_{\zeta.2}, K_{\zeta.3}, K_{Ekin}$ sont des paramètres de système de mesure déterminés au préalable expérimentalement, notamment au cours d'un étalonnage du système de mesure et/ou au moyen de calculs assistés par ordinateur, lesquels paramètres sont notamment conservés en interne, sous la forme de valeurs fixes, dans une mémoire de données non volatile prévue dans l'électronique de transmetteur.

6. Système de mesure selon la revendication 5 en relation avec les revendications 3 et 4,

- pour lequel l'électronique de transmetteur génère la valeur mesurée de débit massique ($X_m$) en se basant sur la relation suivante :

$$X_m = K_m \cdot (X_{\Delta\varphi} / X_f)$$

où $K_m$ est un paramètre de système de mesure déterminé au préalable expérimentalement, notamment au cours d'un étalonnage du système de mesure et/ou au moyen de calculs assistés par ordinateur, lequel paramètre est notamment conservé en interne, sous la forme de valeurs fixes, dans une mémoire de données non volatile prévue dans l'électronique de transmetteur ; et/ou

- pour lequel l'électronique de transmetteur génère la valeur mesurée de densité ($X_\rho$) au moyen de la valeur mesurée de fréquence ($X_f$), notamment en se basant sur la relation suivante :

$$X_\rho = K_{\rho,1} + (K_{\rho,2} / X_f^2),$$

où $K_{\rho,1}$, $K_{\rho,2}$ sont des paramètres de système de mesure déterminés au préalable expérimentalement, notamment au cours d'un étalonnage du système de mesure et/ou au moyen de calculs assistés par ordinateur, lesquels paramètres sont notamment conservés en interne, sous la forme de valeurs fixes, dans une mémoire de données non volatile prévue dans l'électronique de transmetteur.

7. Système de mesure selon les revendications 2 et 5,

- pour lequel l'électronique de transmetteur génère la valeur mesurée de nombre de Reynolds en utilisant à la fois la valeur mesurée de débit massique ($X_m$) et la valeur mesurée de viscosité ($X_\eta$), notamment en se basant sur la relation suivante

$$X_{Re} = K_{Re} \cdot (X_m / X_\eta),$$

où $K_{Re}$ est un paramètre de système de mesure déterminé au préalable expérimentalement, notamment au cours d'un étalonnage du système de mesure et/ou au moyen de calculs assistés par ordinateur, lequel paramètre est notamment conservé en interne, sous la forme de valeurs fixes, dans une mémoire de données non volatile prévue dans l'électronique de transmetteur.

8. Système de mesure selon l'une des revendications précédentes, pour lequel l'électronique de transmetteur génère, pour la détermination de la valeur mesurée de différence de pression ($X_{\Delta p}$) au moyen du premier signal primaire et au moyen du deuxième signal primaire, une valeur mesurée d'énergie d'écoulement ($X_{Ekin}$), qui représente une énergie cinétique, $\rho U^2$, du produit s'écoulant dans le transducteur et dépendant d'une densité, $\rho$, et d'une vitesse d'écoulement, U, du produit s'écoulant dans le transducteur.

9. Système de mesure selon la revendication 8, en relation avec la revendication 5, pour lequel l'électronique de transmetteur génère la valeur mesurée d'énergie d'écoulement ($X_{Ekin}$) en se basant sur la relation suivante :

$$X_{Ekin} = K_{Ekin} \cdot ((X_m)^2 / X_\rho)$$

où $K_{Ekin}$ est un paramètre de système de mesure déterminé au préalable expérimentalement, notamment au cours d'un étalonnage du système de mesure et/ou au moyen de calculs assistés par ordinateur, lequel paramètre est notamment conservé en interne, sous la forme de valeurs fixes, dans une mémoire de données non volatile prévue dans l'électronique de transmetteur.

10. Système de mesure selon l'une des revendications précédentes, pour lequel l'électronique de transmetteur génère, pour la détermination de la valeur mesurée de différence de pression ($X_{\Delta p}$), un coefficient de chute de pression ($X_\zeta$) qui représente une chute de pression à travers le transducteur, dépendant du nombre de Reynolds, $Re$, momentané du produit en écoulement, laquelle chute de pression se rapporte à une énergie cinétique momentanée du produit s'écoulant dans le transducteur, notamment selon la relation suivante :

$$X_\zeta = K_{\zeta,1} + K_{\zeta,2} \cdot X_{Re} \text{ puiss. } K_{\zeta,3},$$

où $K_{\zeta,1}$, $K_{\zeta,2}$, $K_{\zeta,3}$ sont des paramètres de système de mesure déterminés au préalable expérimentalement, notamment conservés en interne, sous la forme de valeurs fixes, dans une mémoire de données non volatile prévue dans l'électronique de transmetteur.

**11.** Système de mesure selon la revendication 10, en relation avec la revendication 5, pour lequel l'électronique de transmetteur génère une valeur mesurée de différence de pression en utilisant le coefficient de chute de pression ($X_\zeta$), notamment selon la relation suivante :

$$X_{\Delta p} = X_\zeta \cdot K_{Ekin} \cdot ((X_m)^2 / X_\rho),$$

où $K_{Ekin}$ est un paramètre de système de mesure conservé notamment en interne, sous la forme d'une valeur fixe, dans une mémoire de données non volatile prévue dans l'électronique de transmetteur.

**12.** Système de mesure selon l'une des revendications précédentes, pour lequel l'électronique de transmetteur génère - en utilisant la valeur mesurée de différence de pression et au moyen d'une première valeur mesurée de pression ($X_{p1}$), notamment conservée en interne dans une mémoire de données volatile prévue dans l'électronique de transmetteur, laquelle valeur représente une première pression, *p_ref*, régnant dans le produit en écoulement, notamment en amont d'une extrémité de sortie du transducteur et/ou en aval d'une extrémité d'entrée du transducteur - une deuxième valeur mesurée de pression ($X_{p2}$), qui représente une deuxième pression $p_{krit}$ statique, notamment minimale et/ou considérée comme critique pour le système de mesure, pression qui règne à l'intérieur du produit en écoulement.

**13.** Système de mesure selon la revendication 12, lequel système de mesure comprend en outre, pour la génération de la première valeur mesurée de pression ($X_{p1}$), un capteur de pression communiquant en fonctionnement avec l'électronique de transmetteur et destiné à mesurer une pression statique régnant dans une conduite acheminant le produit, notamment en amont d'une extrémité d'entrée ou en aval d'une extrémité de sortie du transducteur.

**14.** Système de mesure selon la revendication 12 ou 13,

- pour lequel l'électronique de transmetteur génère, en utilisant la deuxième valeur mesurée de pression ($X_{p2}$), une alarme qui signale un franchissement par défaut d'une pression statique minimale admissible, définie au préalable, régnant dans le produit, notamment perceptible de manière visuelle et/ou acoustique ; et/ou
- pour lequel l'électronique de transmetteur génère, en utilisant la deuxième valeur mesurée de pression ($X_{p2}$), une alarme qui signale notamment une apparition imminente de cavitation dans le produit, notamment perceptible de manière visuelle ou acoustique.

**15.** Système de mesure selon l'une des revendications précédentes,

- pour lequel l'électronique de transmetteur génère, en utilisant la valeur mesurée de différence de pression, une alarme qui signale un franchissement par excès d'une diminution maximale admissible, définie au préalable, d'une pression statique régnant dans le produit s'écoulant dans le transducteur, notamment perceptible de manière visuelle et/ou acoustique ; et/ou
- pour lequel l'électronique de transmetteur génère, en utilisant la valeur mesurée de différence de pression, une alarme qui signale une chute de pression excessive dans le produit, provoquée par le transducteur, notamment perceptible de manière visuelle ou acoustique.

**16.** Système de mesure selon l'une des revendications précédentes,

- pour lequel le transducteur comprend en outre un boîtier de transducteur (100) avec une première extrémité de boîtier côté entrée, notamment comportant une bride de raccordement pour un segment de conduite alimentant un produit au transducteur, et avec une deuxième extrémité de boîtier côté sortie, notamment comportant une bride de raccordement pour un segment de conduite évacuant un produit du transducteur, et
- pour lequel la valeur mesurée de différence de pression ($X_{\Delta p}$) représente une différence de pression apparaissant au total depuis la première extrémité de boîtier jusqu'à la deuxième extrémité de boîtier dans le produit en écoulement, notamment de telle sorte que le premier point de référence pour la différence de pression représentée par la valeur mesurée de différence de pression ($X_{\Delta p}$) soit localisé dans la première extrémité de boîtier côté entrée du boîtier de transducteur (100) et le deuxième point de référence pour la différence de pression représentée par la valeur mesurée de différence de pression ($X_{\Delta p}$) soit localisé dans la deuxième extrémité de boîtier côté sortie du boîtier de transducteur (100).

**17.** Système de mesure selon la revendication 16,

- pour lequel la première extrémité côté entrée du boîtier de transducteur (100) est constituée au moyen d'un premier diviseur d'écoulement (15) disposé côté entrée, comportant deux ouvertures d'écoulement distantes l'une de l'autre, et la deuxième extrémité côté sortie du boîtier de transducteur (100) est constituée au moyen d'un deuxième diviseur d'écoulement (16) disposé côté sortie, comportant deux ouvertures d'écoulement distantes l'une de l'autre,
- pour lequel le transducteur comporte deux tubes de mesure parallèles, destinés à acheminer le produit en écoulement, tubes parmi lesquels

-- un premier tube de mesure (10) aboutit avec une première extrémité de tube de mesure, située côté entrée, dans une première ouverture d'écoulement du premier diviseur d'écoulement (15) et avec une deuxième extrémité de tube de mesure, située côté sortie, dans une première ouverture d'écoulement du deuxième diviseur d'écoulement (16), et
-- un deuxième tube de mesure (10') aboutit avec une première extrémité de tube de mesure, située côté entrée, dans une deuxième ouverture d'écoulement du premier diviseur d'écoulement (15) et avec une deuxième extrémité de tube de mesure, située côté sortie, dans une deuxième ouverture d'écoulement du deuxième diviseur d'écoulement (16) ;

- pour lequel l'au moins un excitateur de vibrations électromécanique est destiné à l'excitation et/ou au maintien des vibrations diamétralement opposées du premier tube de mesure et du deuxième tube de mesure, notamment des vibrations de flexion de chacun des tubes de mesure autour de l'axe de vibration imaginaire reliant de façon imaginaire la première extrémité de tube de mesure respective et la deuxième extrémité de tube de mesure respective, avec une fréquence de résonance naturelle du transducteur ; et
- pour lequel le premier signal primaire généré au moyen du premier capteur de vibration représente les vibrations côté entrée du premier tube de mesure par rapport au deuxième tube de mesure, et pour lequel le deuxième signal primaire généré au moyen du deuxième capteur de vibration représente les vibrations côté sortie du premier tube de mesure par rapport au deuxième tube de mesure.

**18.** Procédé destiné à la mesure d'une différence de pression apparaissant au sein d'un produit en écoulement, lequel procédé comprend les étapes suivantes :

- Écoulement du produit à travers au moins un tube de mesure ;
- Excitation de l'au moins un tube de mesure en vibrations, notamment des vibrations de flexion autour d'un axe de vibration imaginaire reliant de façon imaginaire une première extrémité de tube de mesure côté entrée et une deuxième extrémité de tube de mesure côté sortie ;
- Génération d'un premier signal primaire représentant les vibrations côté entrée de l'au moins un tube de mesure, ainsi que d'un deuxième signal primaire représentant les vibrations côté sortie de l'au moins un tube de mesure ;
- Utilisation du premier signal primaire et/ou du deuxième signal primaire pour la génération d'une valeur mesurée de nombre de Reynolds représentant un nombre de Reynolds, *Re,* pour le produit en écoulement, ainsi que
- Utilisation de la valeur mesurée de nombre de Reynolds pour la génération d'une valeur mesurée de différence de pression, qui représente une différence de pression survenant entre deux points de référence au sein du produit en écoulement, lesquels points sont notamment localisés à l'intérieur du transducteur.

**19.** Procédé selon la revendication précédente, comprenant en outre :

- Génération d'une valeur mesurée de débit massique représentant un débit massique du produit en écoulement, notamment au moyen du premier signal primaire et au moyen du deuxième signal primaire ;
- Génération d'une valeur mesurée de densité représentant une densité du produit en écoulement ; et
- Utilisation de la valeur mesurée de débit massique, de la valeur mesurée de densité ainsi que de la valeur mesurée de nombre de Reynolds pour la génération de la valeur mesurée de différence de pression.

Fig. 1b

Fig. 1a

Fig. 2b

Fig. 2a

Fig. 3

EP 2 519 805 B1

Fig. 4

EP 2 519 805 B1

Fig. 5

EP 2 519 805 B1

Fig. 6

Fig. 7

EP 2 519 805 B1

Fig. 8

Fig. 9

Fig. 10

Fig. 11

EP 2 519 805 B1

Fig. 12

**EP 2 519 805 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- JP 8136311 A
- JP 9015015 A
- US 20070119264 A
- US 20070119265 A
- US 20070151370 A
- US 20070151371 A
- US 20070186685 A
- US 20080034893 A
- US 20080141789 A
- US 4680974 A
- US 4738144 A
- US 4777833 A
- US 4801897 A
- US 4823614 A
- US 4879911 A
- US 5009109 A
- US 5024104 A
- US 5050439 A
- US 5291792 A
- US 5359881 A
- US 5398554 A
- US 5476013 A
- US 5531126 A
- US 5602345 A
- US 5691485 A
- US 5734112 A
- US 5796010 A
- US 5796011 A
- US 5796012 A
- US 5804741 A
- US 5861561 A
- US 5869770 A
- US 5945609 A
- US 5979246 A
- US 6047457 A
- US 6092429 A
- US 6073495 A
- US 6311136 A
- US 6223605 B
- US 6330832 B
- US 6397685 B

- US 6513393 B
- US 6557422 B
- US 6651513 B
- US 6666098 B
- US 6691583 B
- US 6840109 B
- US 6868740 B
- US 6883387 B
- US 7017424 B
- US 7040179 B
- US 7073396 B
- US 7077014 B
- US 7080564 B
- US 7134348 B
- US 7216550 B
- US 7299699 B
- US 7305892 B
- US 7360451 B
- US 7392709 B
- US 7406878 B
- WO 0014485 A
- WO 0102816 A
- WO 2004072588 A
- WO 2008013545 A
- WO 2008077574 A
- WO 9529386 A
- WO 9516897 A
- WO 9940394 A
- EP 1659377 A
- WO 2009134268 A
- WO 0036379 A
- US 6711958 B
- US 5349872 A
- US 6006609 A
- US 6920798 B
- US 5731527 A
- US 5705754 A
- US 6311136 B
- US 5576500 A
- US 7284449 B
- US 6910366 B

43